(19) **Europäisches Patentamt**
European Patent Office
Office européen des brevets

(11) **EP 1 332 591 B1**

(12) **EUROPÄISCHE PATENTSCHRIFT**

(45) Veröffentlichungstag und Bekanntmachung des Hinweises auf die Patenterteilung:
**14.11.2007 Patentblatt 2007/46**

(21) Anmeldenummer: **01994009.7**

(22) Anmeldetag: **25.09.2001**

(51) Int Cl.:
**H04L 25/02** *(2006.01)* **H04L 25/03** *(2006.01)*

(86) Internationale Anmeldenummer:
**PCT/DE2001/003720**

(87) Internationale Veröffentlichungsnummer:
**WO 2002/039687 (16.05.2002 Gazette 2002/20)**

(54) **VERFAHREN UND EINRICHTUNGEN ZUR KOMPENSATION VON STÖRUNGEN DURCH MEHRWEGEEMPFANG**

METHOD AND DEVICES FOR COMPENSATING FOR INTERFERENCES BY MULTIPATH RECEPTION

PROCEDE ET DISPOSITIFS DE COMPENSATION D'INTERFERENCES PAR RECEPTION PAR TRAJETS MULTIPLES

(84) Benannte Vertragsstaaten:
**AT BE CH CY DE DK ES FI FR GB GR IE IT LI LU MC NL PT SE TR**
Benannte Erstreckungsstaaten:
**LT LV**

(30) Priorität: **07.11.2000 DE 10056088**

(43) Veröffentlichungstag der Anmeldung:
**06.08.2003 Patentblatt 2003/32**

(73) Patentinhaber: **IQ Wireless GmbH**
**12489 Berlin (DE)**

(72) Erfinder:
• **JÄCKEL, Klaus**
**12529 Schönefeld (DE)**
• **HACHENBERGER, Andreas**
**01108 Dresden (DE)**
• **JAEGER, Klaus**
**12555 Berlin (DE)**
• **KRAMP, Eberhard**
**16341 Zepernick (DE)**
• **REIBE, Mathias**
**06846 Dessau (DE)**
• **STADLER, Bruno**
**12487 Berlin (DE)**

(56) Entgegenhaltungen:
**WO-A-01/13516**

• **HEUNG-NO LEE, POTTIE: "Channel estimation based adaptive equalization/diversity combining for time-varying dispersive channels" IEEE VEHICULAR TECHNOLOGY CONFERENCE, 4. - 7. Mai 1997, Seiten 884-888, XP000736735 New york, US**
• **TSATSANIS ET AL: "Estimation and equalization of fading channels with random coefficients" SIGNAL PROCESSING , Bd. 53, Nr. 2/3, September 1996 (1996-09), Seiten 211-229, XP000628820 Amsterdam, NL ISSN: 0165-1684**
• **ANDOH ET AL.: "Channel Estimation Using Time Multiplexed Pilot Symbols for Coherent Rake Combining for DS-CDMA Mobile Radio" IEEE INTERNATIONAL SYMPOSIUM ON PERSONAL, INDOOR AND MOBILE RADIO COMMUNICATIONS, 1. - 4. September 1997, Seiten 954-958, XP002128851 New York, US**

EP 1 332 591 B1

**Beschreibung**

Die vorliegende Erfindung betrifft das Gebiet der Einrichtungen und Verfahren, die stationären Teilnehmern den drahtlosen Zugang zum Internet und zum PSTN ermöglichen, speziell der Art, daß sowohl der Zugang zum Internet als auch der Zugang zum PSTN direkte Zugänge sind, und ein Teilnehmer beide Zugänge simultan und unabhängig voneinander nutzen kann. Im Detail betrifft die Erfindung die Verfahren und

Einrichtungen zur Kompensation von Störungen durch Mehrwegeausbreitung in derartigen Funksystemen, insbesondere der aufwandsgünstigen und präzisen Lösung des Problems.

Drahtlose lokale Zugangsnetze zum PSTN haben sich im letzten Jahrzehnt immer mehr durchgesetzt und sind inzwischen landläufig unter dem Begriff WLL (Wireless Local Loop) eingeführt. Diese Zugangsnetze sind unter dem Aspekt entwickelt, daß sie dem Teilnehmer die telekommunikative Grundversorgung als POTS (Plain Old Telephone Service) bieten. Sie unterscheiden sich insofern von den Mobilfunknetzen, die das Merkmal der Mobilität zusätzlich zu einer anderweitig bereits vorhandenen Grundversorgung realisieren, ohne diese ersetzen zu wollen oder ersetzen zu können. Ein daraus resultierendes unterscheidendes Merkmal ist, daß bei WLL die Teilnehmerstationen keine Endgeräte darstellen, sondern Schnittstellen für den Anschluß von Endgeräten nach Wahl des Teilnehmers aufweisen, während bei Mobilfunknetzen die Teilnehmerstationen Endgerätefunktion besitzen.

Ein typischer Vertreter der ersten Generation von WLL sind die in DE 42 40 249 beschriebenen Einrichtungen und Verfahren. Inzwischen sind vielfältige Weiterentwicklungen erfolgt, die vor allem den Übergang von der analogen zur digitalen Übertragung im Airinterface, die Steigerung der Datenraten für Modem- und Faxübertragungen und die Erweiterung des Diensteangebotes beinhalten.

Für heutige Bedingungen sind diese Einrichtungen inclusive der erfolgten Weiterentwicklungen nicht ausreichend. Der Zugang zum Internet ist inzwischen ein unverzichtbares Telekommunikationsangebot. Die existierenden WLL erlauben zwar den Zugang zum Internet mittels Modem über das PSTN, jedoch ist dies auf Grund der geringen Bandbreiten / Datenraten, die der Sprachübertragung im Airinterface von WLL der bisherigen Art zur Verfügung gestellt werden, uneffektiv. Zudem ist der Zugang zum PSTN über WLL meist die einzige Kommunikationsverbindung des Teilnehmers und die Belegung durch einen Internetzugriff lästig und behindernd und der Akzeptanz von WLL abträglich.

Entsprechend sind vielerorts Bestrebungen im Gange, die Mängel der bestehenden Einrichtungen durch neue Lösungsansätze zu überwinden. Beispiele sind in den nachfolgenden Ausführungen beschrieben.

In der Veröffentlichung WO 99/55030 werden ein Verfahren und eine Einrichtung beschrieben, die es mobilen Teilnehmern ermöglichen, über Funk auf das Internet zuzugreifen. Das Airinterface beruht auf den im Anspruch 1 von WO 99/55030 beschriebenen Verfahren der Übertragung mittels OFDM (Orthogonal Frequency Division Multiplex), einer zwei- oder mehrwertigen Differenz-Phasenmodulation, dem Empfang unter Verwendung von Antennenarrays (Smart Antennas) und phasenbewerteter Addition der Signale aller Einzelantennen jeweils für jeden Subträger und der Demodulation der so gewonnenen Empfangssignale durch Bestimmung der Phasendifferenz zwischen jeweils zwei benachbarten Subträgern für jeweils alle Subträgerpaare.

Ein bestimmendes Merkmal der in WO 99/55030 beschriebenen Verfahren und Einrichtung ist, daß ausschließlich paketorientierte Dienste übertragen werden. Dies hat zur Folge, daß Sprache systemintern als VoIP (Voice over IP) übertragen wird. Der Teilnehmer muß demzufolge eine VoIP-taugliche Einrichtung an die Teilnehmerstation anschalten, um Sprachverbindungen herstellen zu können. Sprachverbindungen zu anderen VoIP-tauglichen Einrichtungen werden über das Internet geroutet und Verbindungen in das PSTN (Public Switched Telephone Network) über Telephone Gateways realisiert.

In der Veröffentlichung US 5910946 (GB 2321158; JP 10224853) werden ein Verfahren und eine Einrichtung beschrieben, die es mobilen Teilnehmern ermöglichen, über Funk sowohl Sprache als auch Daten über das Internet als auch über das PSTN zu übertragen. Die Systemarchitektur beinhaltet, daß eine oder mehrere Basisstationen über eine E1- oder T1-Verbindung an ein Central Office angeschaltet sind, welches sowohl mit dem PSTN als auch mit dem Internet verbunden ist. Kommende wie auch gehende Verbindungen von/zu Teilnehmern im PSTN werden vom Central Office bis in die Basisstation als 64 kbps PCM-Signal in einem Timeslot der E1- oder T1-Verbindung übertragen. Kommende wie auch gehende Verbindungen von/zu Internetteilnehmern, die Voice over IP bedienen, werden vom Central Office bis in die Basisstation als Internetverbindung ebenfalls in Timeslots der E1- oder T1-Verbindung übertragen. Von der Basisstation werden für beide Verbindungsarten die Sprachsignale nach entsprechender Umsetzung als digitales nach QSELP komprimiertes Sprachsignal mit 8 kbps oder 13,3 kbps im Airinterface in beiden Richtungen übertragen. Es gibt in der Veröffentlichung keine explizite Aussagen über die Teilnehmerstation. Es ist wahrscheinlich, daß diese als mobile Einrichtung gleichzeitig Endgerät ist. Das Verfahren begrenzt die Möglichkeit der Datenübertragung auf die mit dem oben genannten Verfahren vorgegebenen Datenraten, was für den mobilen Teilnehmer einen akzeptablen Wert darstellen kann.

In den korrespondierenden Veröffentlichungen WO 99/62268 und WO 99/61984 werden ein Verfahren und eine Einrichtung beschrieben, die es mobilen Teilnehmern ermöglichen, über Funk auf das Internet zuzugreifen. Das Verfahren hat vor allem die Zielstellung, eine schmalbandige Übertragung im Airinterface zu realisieren, wie sie dem Stand der Technik entsprechend von mobilen Einrichtungen meist nur unterstützt wird.

Hierzu wird erstens im Airinterface der Informationsaustausch zwischen Teilnehmerstation und Basisstation nicht als Internetverbindung mit TCP/IP durchgeführt. Der Datenaustausch zwischen dem "Wireless Client" der Teilnehmerstation und einem "Wireless Access Point" in der Basisstation erfolgt mit weniger datenintensiven Verfahren und Protokollen. In der Basisstation werden die Informationen vom "Wireless Access Poinf"über einen "Wireless Network Tunneler" zu einem Proxy Server (und umgekehrt) übertragen. Erst der Proxy Server stellt eine reguläre Internetverbindung mit TCP/IP her.

Hierzu wird zweitens mit einer verteilten Web-Site gearbeitet, indem zum Teilnehmer eine Web-Site nur teilweise übertragen wird. Die übertragene Information ist dahingehend eingeschränkt, daß nur Auswahlelemente zum Teilnehmer übertragen werden, ausreichend dafür, daß der Teilnehmer weitere Anforderungen definieren und über das Airinterface an die Einrichtungen der Basisstation schicken kann, die die anderen Teile der Web-Site verwalten. Diese Einrichtungen schicken an den Teilnehmer die speziell angeforderten Teile der Web-Site oder schicken eine daraus resultierende Anforderung in das Internet. Eine Antwort aus dem Internet wird dann in der gleichen Form mit dem Teilnehmer abgearbeitet.

Das Verfahren der Veröffentlichungen WO 99/62268 und WO 99/61984 kann dem Teilnehmer damit einen inhaltlich nicht eingeschränkten Zugriff zum Internet bieten, jedoch ist der Zugriff in der Handhabung aufwendig und langsam. Für und von mobilen Teilnehmern werden solche einschränkenden Bedingungen jedoch meist akzeptiert.

In der Veröffentlichung EP 0927482 (WO 99/01969; AU 8181498) wird ein Verfahren beschrieben, welches es Teilnehmern ermöglicht, über Funk auf das Internet zuzugreifen. Hierfür sollen die bestehenden Mobilfunknetze genutzt werden, indem ein Computer über ein "cellular telephone modem" mit der mobilen Teilnehmerstation verbunden wird. Das Konzept kann, bei Anwendung entsprechender Computer, als bedingt mobil oder besser halbstationär bezeichnet werden. Die Veröffentlichung EP 0927482 befaßt sich nicht mit dem Airinterface, welches als vom Mobilfunknetz geboten und existent betrachtet wird, als vielmehr mit den Problemen des Routing, Tunneling und der Authentifizierung in den verschiedenen Netzen. Ein besonderer Aspekt der dargestellten Architektur ist, daß die Verbindungen aus dem Mobilnetz über ein "Communication Chassis" zu einem bestimmten Internet-Serviceprovider (ISP) geroutet werden. Mobilität vorausgesetzt können somit Zugriffsversuche von Teilnehmern erfolgen, die nicht Kunden dieses bestimmten Serviceproviders sind. Es wird für diesen Fall eine Lösung dargestellt, wie mobilen Teilnehmern der Zugang zum Internet und anderen Netzen trotzdem ermöglicht wird.

Das Verfahren in der Veröffentlichung EP 0927482 ist damit bei der Datenübertragung begrenzt auf die durch die Mobilfunknetze vorgegebenen Datenraten, was für den mobilen Teilnehmer einen akzeptablen Wert darstellen kann.

In der Veröffentlichung US 5905719 (WO 98/12833) werden ein Verfahren und eine Einrichtung beschrieben, die es stationären Teilnehmern ermöglichen, über Funk auf das Internet zuzugreifen. Im spezifischen Airinterface wird als Zugriffsverfahren TDM/TDMA und als Duplexverfahren TDD benutzt. Das Duplexverfahren ist unsymmetrisch ausgestaltet, indem für das Downlink eine vierfach höhere Slotdauer / Datenkapazität als im Uplink bereitgestellt wird. Dies soll dem Fakt Rechnung tragen, daß die von den Teilnehmern verursachte richtungsabhängige Datenlast etwa diesem Verhältnis entsprechen soll. Für die Sprachübertragung auf der Basis von Voice over IP mit 6 kbps oder 16 kbps können schmalbandige Kanäle zugewiesen werden. Hochratige Datenübertragungen bis 248 kbps im Downlink werden durch Mehrkanalzuweisung (Kanalbündelung) realisiert. Datenübertragung und Voice over IP können in diesem Falle simultan erfolgen.

In der Veröffentlichung GB 2313981 wird eine Einrichtung beschrieben, die es stationären Teilnehmern ermöglicht, über Funk auf das Internet zuzugreifen. Die Einrichtung beinhaltet zum ersten, daß für das Uplink der Internetverbindung ein bestehendes öffentliches Funknetz, beispielsweise ein GSM-Netz genutzt wird. Der Teilnehmer wählt zum Verbindungsaufbau den Einwahlpunkt seines Internet Serviceproviders an. Die Verbindungsanmeldung und alle weiteren Daten im Uplink werden über dieses Funknetz und über das PSTN zum Einwahlpunkt dieses Internet Serviceproviders geroutet. Die Einrichtung beinhaltet zum zweiten, daß für das Downlink der Internetverbindung ein spezielles breitbandiges Funksystem genutzt wird. Hierzu werden am Einwahlpunkt des Internet Serviceproviders die im Uplink zu übertragenden Daten ausgekoppelt und über eine hochratige Datenverbindung zum Sender des speziellen Funksystems übertragen und von diesem über das Airinterface zum Empfänger am Standort des Teilnehmers übertragen. Der Lösung liegt die Behauptung zu Grunde, daß der Datenverkehr im Uplink im allgemeinen gering im Vergleich zum Datenverkehr im Downlink ist und für den geringen Datenverkehr im Uplink ein Mobilfunkkanal ausreichend sein sollte. Bestandteil der beschriebenen Einrichtung sind die Splitter/Combiner, die den Datenverkehr am Teilnehmerinterface und am Einwahlpunkt des Internet Serviceproviders trennen beziehungsweise zusammenführen und die unterschiedlichen Kanäle für die beiden Übertragungsrichtungen bedienen.

Es zeigt sich, daß der drahtlose Internetzugang bei den bisher existenten oder in Vorbereitung befindlichen Lösungen vorwiegend auf den mobilen Nutzer orientiert ist und meist schmalbandige Übertragungsverfahren, teilweise auch auf Basis der öffentlichen Mobilfunknetze, realisiert werden. Diese Orientierung führt zu Einschränkungen, die vorwiegend in der Datenübertragungsgeschwindigkeit begründet sind. Verfahren, die mit speziellen breitbandigeren Übertragungsverfahren im Airinterface arbeiten, gehen meist von der Annahme aus, daß Internetnutzer in der Regel im Uplink wesentlich geringere Datenmengen übertragen als im Downlink, und gestalten entsprechend das Verhältnis der Übertragungskapazität im Uplink und Downlink. Diese Annahme hat eine recht hohe Wahrscheinlichkeit für eine Internetnutzung, die mit dem Begriff Surfen beschrieben ist, oder den mobilen Teilnehmer, der vorwiegend Auskunftsdienste und ähnliches nutzt.

Des weiteren bieten die vorgestellten Einrichtungen mit drahtlosem Internetzugang Sprachverbindungen ausschließlich auf der Basis von Voice over IP. Insbesondere an der Teilnehmerstation ist die Realisierung von Voice over IP vergleichsweise einfacher als die eines Zugangs zum PSTN (Public Switched Telephone Network). Voice over IP hat jedoch entscheidende Nachteile. Dies sind vor allem die nicht garantierte Verbindung, hohe Verzögerungszeiten durch die Paketierung und durch Übergänge an Gateways, zusätzlich zu den durch die immer benutzten Kompressionsverfahren bedingten Verzögerungszeiten, und das Fehlen von Dienstmerkmalen, wie sie beispielsweise in der BRD als Universaldienste in der TKDLV (Telekommunikations-Universaldienstleistungsverordnung) benannt sind und Mindestangebote für Telekommunikationsdienstleistungen darstellen.

Für solche stationären Teilnehmer, für welche der drahtlose Anschluß die Grundversorgung darstellt, sind die oben genannten Einschränkungen nicht akzeptierbar, auch nicht für deutlich niedrige Preise. In diesem Anwendungsbereich muß mit gewerblicher Nutzung gerechnet werden, die bezüglich der Internetnutzung mehr zu gleichem Datenumfang im Uplink und Downlink tendiert. Des weiteren sind die durch Voice over IP sich ergebenden Einschränkungen nicht akzeptabel und das Fehlen des direkten POTS- oder ISDN-Zugangs mit allen Dienstmerkmalen ein entscheidender Mangel.

Funkkommunikationssysteme, die den neuen Anforderungen gerecht werden, erfordern vor allem spezielle Multiplex- und Zugriffsverfahren, welche die erforderliche Breitbandigkeit und Flexibilität gewährleisten. Zur vollen Ausschöpfung der Leistungsmöglichkeiten der Verfahren ist die Kompensation der Störungen durch Mehrwegeausbreitung eine unverzichtbare Forderung.

Ein fortgeschrittenes Verfahren ist CDM/CDMA (Code Division Multiplex / Code Division Multiple Access).

Code-Multiplex- beziehungsweise -zugriff zeichnet sich vorteilhaft dadurch aus, daß:

- die Nutzer im gleichen Frequenzband arbeiten können,
- eine relativ hohe Störleistung im Band toleriert wird,
- unter bestimmten Bedingungen auch benachbarte Funkzellen die gleiche Frequenz wiederverwenden können.

Bei Anwendung der Direktsequenz-Modulation mit Maximalfolgen als Spreizsequenzen weist die Kreuzkorrelationsfunktion zwischen der empfangenen Codesequenz und der im Empfänger a-priori bekannten Spreizsequenz ein ausgeprägtes Leistungsmaximum dann auf, wenn die Codephasen beider Signale übereinstimmen. Bei allen anderen Codephasen erreicht dieser Wert sehr kleine Werte (nahezu 0). Ist das empfangene Signal derart gestört, daß sich verschiedene Echos ein und desselben gesendeten

Signals mehrfach überlagern, wobei Amplitude und Phase der einzelnen überlagerten Komponenten stochastisch sind, weist auch die beschriebene KKF einen prinzipiell anderen Verlauf auf.

Je nach Phase und Amplitude der Echos bewirkt die Anwendung der KKF eine Unterdrückung der empfangmäßig leistungsschwächeren Pfade gegenüber dem leistungsstärksten Signal um den Prozeßgewinn. Voraussetzung dafür ist, daß eine sequenzsynchrone Entspreizung erfolgt und die leistungsschwächeren Echos um mindestens ein Chip zeitlich versetzt zum Hauptsignal empfangen werden, und alle Echos innerhalb einer Symboldauer im Empfänger eintreffen. Da die Bildung der KKF gleichzeitig der Entspreizung des Signals entspricht, verbessert sich damit das Signal-Stör-Verhältnis bei der Demodulation um den Prozeßgewinn.

In einem anderen Verfahren werden die einzelnen Echo-Pfade einer KKF-Bildung unterzogen und vor der Demodulation phasenrichtig addiert. Damit kann die Symbolleistung bei der Demodulation erhöht werden, indem nicht nur der Haupfpfad, sondern auch die Echopfade leistungsmäßig berücksichtigt werden. Derartige Strukturen sind unter dem Begriff RAKE-Empfänger bekannt.

Im Code-Multiplex bei Überlagerung von mehreren Maximalfolgen im gleichen Frequenzband muß von den Spreizsequenzen zusätzlich gefordert werden, daß sie untereinander gut trennbar sind. Häufig werden dafür sogenannte GOLD-Folgen verwendet, von welchen mehrere Familien bekannt sind und die innerhalb einer Familie niedrige KKF-Werte untereinander für beliebige Codephasen aufweisen. Jedoch sind diese KKF-Werte nicht Null, so daß ein Übersprechen bei der Entspreizung zwischen den einzelnen Folgen auftritt, was den Multiplexbetrieb auf vergleichsweise wenige der besagten Folgen beschränkt.

Für Code-Multiplex mit der nachrichtentheoretisch maximal möglichen Übertragungskapazität muß man orthogonale Signalräume nutzen. Walsh-Hadamard-Sequenzen sind zum Beispiel derartige orthogonale Codesequenzen. Die Orthogonalität beschränkt sich aber auf eine Vorzugs-Codephase, so daß zur Ausnutzung der Orthogonalität alle Sequenzen codephasensynchron in einem Empfänger eintreffen und eine synchrone Demodulation vorgenommen werden müssen.

Auf Grund der endlichen KKF außerhalb dieser Vorzugs-Codephase läßt sich das RAKE-Prinzip nicht mehr oder nur für wenige gleichzeitig parallel angewendete Codesequenzen nutzen, da die KKF-Werte außerhalb des Vorzugsphasenwertes sowohl durch die Korrelations-Werte mit der eigenen Codesequenz als auch allen anderen aktiven Codesequenzen überlagert werden.

Im Umkehrschluß folgt damit, daß alle außerhalb der Vorzugs-Codephase eintreffenden Echosignale der eigenen Codesequenz als auch aller anderen aktiven Codesequenzen einen Anteil zur KKF während der Vorzugs-Codephase beitragen, der als Störleistung eingeht. Damit wird die Unterdrückung von Mehrwegeechos für die meisten Anwendungen zur Notwendigkeit.

Als Lösung für dieses Problem sind Interference Canceller und Multiuser-Detektoren bekannt.

Entsprechende Verfahren werden zum Beispiel bei P.Jung "Analyse und Entwurf digitaler Mobilfunksysteme", B.G.Teubner Stuttgart 1997, umfassend behandelt. Einige bekannte Verfahren sind Zero-forcing-Verfahren, Least-mean-square-Verfahren, Rekursiver Least-square Algorithmus oder Lattice-Gradientenverfahren. Eine Klassifizierung erfolgt danach, ob die verwendeten Verfahren linear oder nichtlinear sind, statisch oder adaptiv sind, welche Optimierungsverfahren bzw. -kriterien verwendet werden. Ein diesbezügliches Grundlagenwerk ist K.D.Kammeyer "Nachrichtenübertragung", B.G.Teubner Stuttgart 1992.

Die Verfahren werden vor allem bei zeitgeteilter und frequenzgeteilter (TDMITDMA bzw. FDM/FDMA) Übertragung angewendet, weil hier im Empfänger lediglich die Sendung eines Teilnehmers über einen Übertragungskanal zu entzerren und zu demodulieren ist. Prinzipiell arbeiten die Verfahren so, daß die Einrichtungen zur Durchführung im Empfänger vor dem Demodulator angeordnet sind oder diesen mit einbeziehen und auf Grund von a-priori-Kenntnissen über die ideale Kanalimpulsantwort und Vergleich derselben mit der realen Kanalimpulsantwort eine Berechnung der notwendigen Koeffizienten des Entzerrernetzwerkes durchführen. Diese Berechnungen sind rechenaufwendig durch die notwendige Inversion umfangreicher Matrizen. Das Entzerremetzwerk ist in der Regel sehr komplex, z.B. als FIR-Filter (Finite Impulse Response) mit mehreren Dutzend Koeffizienten, und stellt damit hohe Anforderungen an eine Echtzeit-Signalverarbeitung.

So beinhaltet WO 0002328 ein typisches Beispiel für die Delayspread-Entzerrung mittels MLSE (Maximum Likelihood Sequence Estimator) in einem TDMA basierten System. Das Verfahren setzt voraus, daß keine Überlagerung mehrerer Übertragungskanäle erfolgt und das am Empfänger eintreffende Signal nur mit seinen eigenen Umwegsignalen überlagert ist. Schätzung der Kanalimpulsantwort und Demodulation können daher in einem geschlossenen und kontinuierlichen Prozeß erfolgen.

In US 5809086 wird eine entsprechende Ausführung mit wahlweiser Anwendung von DFE (Decision Feedbach Equalizer) oder DDFSE (Delayed Decision-Feedback Sequence Estimator) beschrieben. Das Verfahren hat gleiche Voraussetzungen wie bei WO 0002328 genannt und basiert des Weiteren darauf, daß zu Beginn jedes Datenpaketes ein dem Empfänger a priori bekanntes so genanntes Sync_Word (in der Literatur meist als Pilotsignal bezeichnet) übersandt wird, welches für die Schätzung der Kanalimpulsantwort benutzt wird. Da am Anschaltpunkt der Einrichtung zur Schätzung der Kanalimpulsantwort noch keine Bit- bzw. Symbolentscheidung erfolgt ist und damit die Bitposition noch nicht bekannt ist, muß mit einem Oversampling von vier gearbeitet werden.

TDMA-Verfahren haben generell und auch in den genannten Beispielen das Problem, daß auf Grund der zeitsequentiellen Übertragung die Symbolrate hohe Werte annimmt und das Produkt $\Pi_{DS}$=Symboirate*Umwegiaufzeit: Werte » 1 annimmt, das heißt, daß die Umwegsignale eines Symbols $A_n$ als Intersymbol Interferenzen der Signale $A_{n+k}$, k=1 ... $\Pi_{DS}$ in Erscheinung treten. Die Auswahl von Pilotsignalen, die unter diesen Bedingungen eine Bestimmung der Kanalimpulsantwort ermöglichen, ist deshalb sehr maßgeblich für die Bestimmung, die unter diesen Bedingungen aber immer eine Schätzung bleibt.

Bei Code-Multiplex, insbesondere bei Verwendung orthogonaler Codesequenzen, sind diese Verfahren aus Aufwandsgründen kaum mehr anwendbar. Die parallelen Sendungen vieler Teilnehmer führen zu Multiuserdetektoren, die die Kenntnis über alle momentan verwendeten Codesequenzen des Systems als auch aktuelle Schätzungen der Kanalimpulsantworten aller Sendungen voraussetzen. Je nach Algorithmus des Entzerrers werden alle gesendeten Signale / Codesequenzen oder nur die leistungsmäßig stärksten Interferenzquellen, in vielen Fällen auch der Demodulationsprozeß einschließlich Symbolentscheider in den Algorithmus eingeschlossen. Der mit der Anzahl der gleichzeitig parallel verwendeten Codesequenzen exponentiell steigende Rechenaufwand erlaubt derzeit nur die Anwendung für sehr kurze und geringe Anzahl paralleler Sequenzen. So sieht der TDD-Mode bei der dritten Mobilfunkgeneration (UMTS) den Einsatz von maximal 16 parallelen Codes der Sequenzlänge 16 vor.

Der Stand der Technik wird auch durch US5377226 charakterisiert. US5377226 beschreibt unter anderem die Verwendung von Equalizern in DS-CDMA-Systemen zur Unterdrückung von Mehrwegeausbreitungseffekten und Multiuser-Interferenzen.

Es werden hierin auf Chipebene arbeitende, adaptive Filter als Equalizer beschrieben. Diese sind als lineare FIR-Filter (Finite Impulse Response) ausgeführt; bei welchen die Einstellung und Adaption der Filterkoeffizienten auf einem Least-Mean-Square-Gradienten-Algorithmus basiert, deren Referenzgrößen aus dem letzten zuvor entschiedenen Symbol bzw. Bit eines Empfängers/Demodulators gebildet werden. Nachteilig ist, daß der Vorgang der Adaption sich über eine Vielzahl von entschiedenen Symbolen erstrecken kann.

In der dort beschriebenen Anwendung sind die genannten Empfänger/Demodulatoren die Baugruppen zur Entspreizung der Signale, die entsprechend gesondert im Signalweg nach den adaptiven Filtern angeordnet sein müssen. Ein weiterer Nachteil ist, daß je Empfangszweig, d.h. pro zu empfangender Codesequenz, je ein gesondertes adaptives Filter und ein Entspreizer erforderlich sind.

Die wesentlichen Unterschiede der nachfolgend beschriebenen Erfindung zu US5377226 bestehen darin, daß dort zwar ebenfalls auf Chipebene arbeitende Equalizerfilter verwendet werden, diese jedoch als nichtlineare IIR-Filter (Infinite Impulse Response) ausgeführt sind. Wie in der nachfolgenden Beschreibung ausgeführt, bestehen die für einen Vergleich relevanten Vorteile darin, daß

erstens die Adaption mit wesentlich geringerem Zeitaufwand erfolgt, da die dedizierte Bestimmung der Kanalimpulsantwort auf der Auswertung spezieller Präambelsymbole beruht, wofür im Extremfall ein einziges Symbol ausreichend ist.

zweitens die Messung der Kanalimpulsantwort genauere Filterkoeffizienten liefert als die adaptive Annäherung über die Bewertung der entschiedenen Symbole.

drittens nur ein Equalizerfilter erforderlich ist, unabhängig von der Anzahl der zu empfangenden und einander überlagerten Sendungen/Codesequenzen

Zielstellung des erfindungsgemäßen Verfahrens und der Einrichtung zu dessen Realisierung ist, die Nachteile und Begrenzungen der vorgenannten Einrichtungen und Verfahren zu überwinden und eine aufwandsgünstige Lösung zur Unterdrückung von Mehrwegestörungen in DS-CDMA-Funksystemen zu realisieren. Die Aufgabe wird entsprechend den Merkmalen der Ansprüche 1 und 2 gelöst.

Ein wesentlicher Aspekt der Erfindung besteht darin, daß eine Eignung für Systeme mit langen Codesequenzen und vielen parallelen Sendungen gegeben ist, so dass die Systemlast nur durch die Anzahl der existierenden, zueinander orthogonalen Sequenzen begrenzt wird.

Ein weiterer Aspekt ist, daß vorzugsweise eine Anwendung in Wireless Local Loop-Systemen erfolgt, bei welchen die Stationarität der Teilnehmestationen vorausgesetzt werden kann, bei welchen zeitliche Änderungen der Kanalimpulsantwort relativ langsam verlaufen, so daß mit geringem Steuerungsaufwand eine Adaption an sich ändernde Bedingungen im Funkkanal vorgenommen werden kann.

Ein weiterer Aspekt ist, daß nicht nur eine Entzerrung für den sogenannten "Rice"-Kanal vorgenommen wird, bei welchem der direkte Empfangspfad leistungsmäßig größer als die Empfangsleistung der verzögerten Echosignale ist. In einer erweiterten Ausführung kann auch ein leistungsmäßig stärkeres verzögertes Echosignal für die Weiterverarbeitung genutzt und der leistungsmäßig schwächere direkte Empfangspfad unterdrückt werden.

Ein weiterer Aspekt ist, daß Verzögerungsglieder mit Verzögerungszeiten entsprechend den Verzögerungen der Echopfade durch die Reihenschaltung einer entsprechenden Vielzahl von Verzögerungsgliedern gebildet werden, deren Verzögerungszeit sich aus dem Abtasttakt ergibt, so daß die Realisierung des Verfahrens günstig mittels Schieberegisterketten oder adäquater Speicherfunktionen und gesteuert durch eine digitale Recheneinheit erfolgen kann.

Ein weiterer Aspekt ist, daß die komplexwertige Entzerrung dadurch realisiert wird, daß identische Entzerrereinrichtungen parallel jeweils in den I- und Q-Zweig eingeschaltet sind, die jede für sich realwertige Operationen durchführen.

Ein weiterer Aspekt ist, daß die Schätzung der Kanalimpulsantwort in den Teilnehmerstationen an Hand einer Pilotsendung der Basisstation vorgenommen wird, die aus zwei Präambelsymbolen besteht, die mit einer speziellen Präambelsequenz gespreizt sind und die simultan und identisch in allen Kanälen vor jedem Timeslot gesendet werden. Die additive Überlagerung der identischen Aussendungen ergibt einen hohen Empfangspegel und damit hohes S/N-Verhältnis in den Empfängern der Teilnehmerstationen, so daß die Schätzung der Kanalimpulsantwort sicher erfolgen kann.

Ein weiterer Aspekt ist, daß die Schätzung der Kanalimpulsantwort in den Teilnehmerstationen mit jeder neuen Pilotsendung erneuert wird und damit eine fortlaufende Adaption erfolgt und daß zur Eliminierung von überlagerten stochastischen Störungen eine gleitende Mittelwertbildung über zwei oder auch mehr als zwei Schätzungen erfolgt.

Ein weiterer Aspekt ist, daß für die Übertragungsrichtung von den Teilnehmerstationen zur Basisstation eine Vorentzerrung in den Teilnehmerstationen erfolgt, für die im ersten Schritt die Koeffizienten benutzt werden, die aus der Schätzung der Kanalimpulsantwort in der jeweiligen Teilnehmerstation resultieren. Dieses Verfahren hat eine zwingende Begründung dahingehend, daß die Einbindung eines Entzerrers in den Empfänger der Basisstation adäquat zur Teilnehmerstation nicht möglich ist, da an diesem Punkt in der Basisstation die überlagerten Sendungen aller aktiven Teilnehmerstationen anliegen, die jede für sich auf Grund der unterschiedlichen Übertragungswege eine andere Kanalimpulsantwort aufweisen. Dieses Verfahren hat eine Berechtigung dadurch, daß in beiden Einrichtungen für Senden und Empfangen jeweils die gleiche Antenne benutzt wird und auf Grund des TDD (Time Division Duplex) in beiden Richtungen die gleiche Frequenz benutzt wird.

Ein weiterer Aspekt ist, daß in der Basisstation eine Schätzung der Kanalimpulsantwort getrennt für jede aktive Teilnehmerstation an Hand einer Pilotsendung vorgenommen wird, die aus zwei Präambelsymbolen besteht, die mit einer speziellen Präambelsequenz gespreizt sind und die von der jeweiligen aktiven Teilnehmerstation in periodischen Abständen vor einem ihr zur Nutzung zugewiesenen Timeslot gesendet werden, wobei das Kanalmodell des WLL-Systems sichert, daß die Pilotsendungen einer Teilnehmerstation nicht von Sendungen anderer Teilnehmerstationen überlagert werden und jede aktive Teilnehmerstation in bestimmten Mindestabständen eine Pilotsendung übertragen kann. Die derart ermittelten Koeffizienten werden in einem Signalisierungskanal oder speziellen Signalisierungsmessage bei Paketdatenübertragung der jeweiligen aktiven Teilnehmerstation übermittelt und ersetzen in einem zweiten Schritt die Koeffizienten, die von der Teilnehmerstation im ersten Schritt aus der Schätzung der Kanalimpulsantwort der Downrichtung ermittelt wurden.

Ein weiterer Aspekt ist, daß in den Teilnehmerstationen die gleichen Einrichtungen für die Entzerrung der empfangenen Signale und die Vorentzerrung der zu sendenden Signale benutzt werden, indem die Ein- und Ausgänge der Einrichtung jeweils an die entsprechenden Punkte des Empfangs- bzw. Sendezweiges geschaltet werden. Die Möglichkeit ist durch den alternierenden Empfangs- und Sendebetrieb des TDD und die Schutzzeiten zwischen beiden Phasen gegeben. In den Umschaltzeiten werden gegebenenfalls auch die Koeffizientensätze getauscht, wenn entsprechend den vorgenannten Aspekten sich Unterschiede ergeben haben.

Die Realisierung erfolgt in einem Funkkommunikationssystem, welches eine Basisstation, eine Vielzahl von Teilnehmerstationen, eine Ortsvermittlungseinrichtung des PSTN und das PSTN, optionale Anschalteinrichtungen, einen ersten Router, einen Zugangspunkt eines ISP (Internet Service Provider) und das Internet, eine lokale OA&M-Einrichtung, ein OA&M-Center und einen zweiten Router/Proxyserver umfaßt.

Ein Ausführungsbeispiel der Erfindung wird an Hand der beigefügten Zeichnungen näher erläutert. Es zeigen:

Figur 1 die Architektur des Kommunikationssystems in seiner Gesamtheit.

Figur 2 das Kanalschema einer konkreten Ausführung der Erfindung bei Nutzung von CDMA in Verbindung mit TDM/TDMA und TDD.

Figur 3 die Struktur eines Multiframe-6 (MF_6) für einen Codekanal, basierend auf einem Kanalschema entsprechend Figur 2.

Figur 4 die Einordnung der speziellen Kanäle für Synchronisation und Steuerung sowie der Schutzzeit für den Laufzeitausgleich in das TDD und das Kanalschema entsprechend Figur 2.

Figur 5 die Struktur eines Slot entsprechend Figur 2.

Figur 6 die Struktur und Funktion eines Muitiframe_32 (MF_32) für eine Ausführung der Erfindung mit n=32 Codekanälen.

Figur 7 eine detailliertere Darstellung eines Ausschnittes aus Figur 6.

Figur 8 die Einordnung eines Entzerrers in den Empfangszweig einer Teilnehmerstation

Figur 9 die Einordnung eines Vorentzerrers in den Sendezweig einer Teilnehmerstation

Figur 10 die Struktur eines Entzerrers/Vorentzerrers

Figur 11 ein Sendesignal, bestehend aus zwei Symbolen, die mit der Präambelsequenz gespreizt sind.

Figur 12 die Kanalimpulsantwort eines ungestörten Kanals

Figur 13 das Empfangssignal, wenn das Sendesignal entsprechend Figur 11 über einen Übertragungskanal mit einem Echopfad mit beispielhaft vorgegebenen Parametern übertragen wird..

Figur 14 die Kanalimpulsantwort entsprechend Beispiel in Figur 13.

Figur 15a das unmodifizierte Empfangssignal am Übergang zwischen Schutzzeit und erstem Präambelsymbol.

Figur 15b das modifizierte Signal am Übergang zwischen Schutzzeit und erstem Präambelsymbol nach rechnerischer Einfügung eines Präambelsymbols in die Schutzzeit.

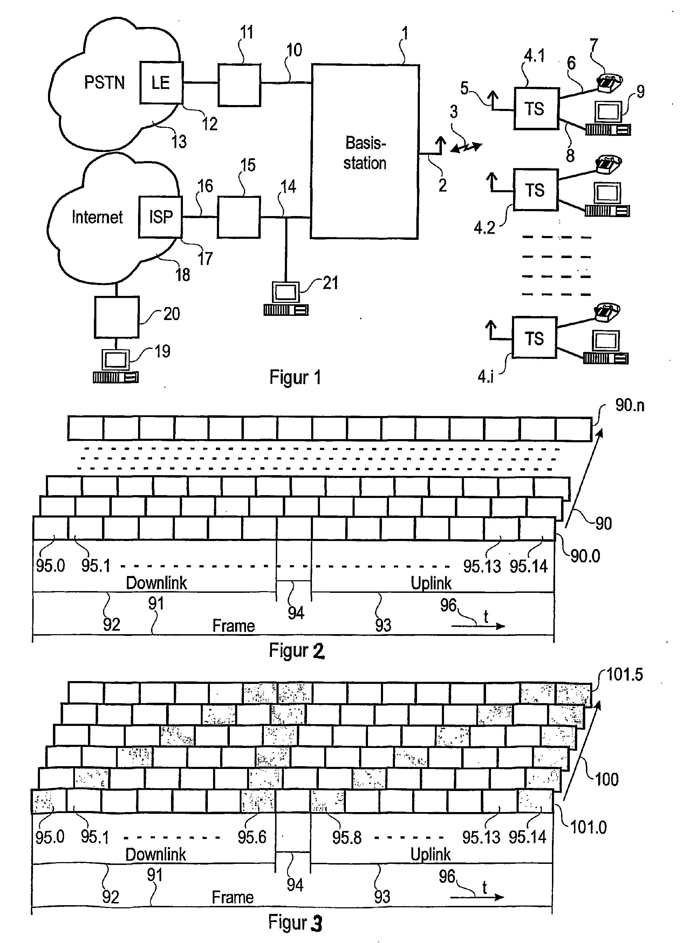

Figur 1 beschreibt die Architektur der Einrichtung in ihrer Gesamtheit. Eine Basisstation 1 besitzt eine Schnittstelle zum Airinterface 3 für die drahtlose Verbindung zu einer Vielzahl von Teilnehmerstationen 4 (1..i). Der Zugang zum Airinterface 3 erfolgt über eine Antenne 2, die gleichermaßen für den Sende- als auch den Empfangsbetrieb genutzt wird.

Die Basisstation 1 besitzt des weiteren eine PCM-Schnittstelle 10, die als eine oder mehrere E1- oder T1-PCM Trunklines ausgeführt ist und die die Basisstation 1 mit einer Ortsvermittlungseinrichtung 12 des PSTN 13 verbindet. Die Schnittstelle 10 ist als konzentriertes Interface ausgeführt, das heißt, daß die Anzahl der PCM-Verbindungen der Anzahl der möglichen Verbindungen im Airinterface entspricht oder diese nur soweit übersteigt, wie es sich durch die Quantelung der E1- oder T1-PCM Trunklines ergibt. Bei Bedarf werden optionale Anschalteinrichtungen 11 in die Verbindung zwischen der Basisstation 1 und der Ortsvermittlungseinrichtung 12 eingeschaltet, wenn die Ortsvermittlungseinrichtung 12 ein konzentriertes Interface nicht unterstützt, sondern nur teilnehmerbezogene Verbindungen wie TIP/ RING (a/b) oder V5.1 bietet. In diesem Falle haben die Anschalteinrichtungen 11 die Aufgabe der physikalischen Anpassung, der Protokollumsetzung und Umsetzung von teilnehmerbezogenen auf konzentrierte Verbindungen. Ein weiterer Grund für den Einsatz der Anschalteinrichtungen 11 kann sein, wenn von der Ortsvermittlungseinrichtung 12 ein Protokoll geboten wird, welches von der Basisstation 1 nicht unterstützt wird

Die Basisstation 1 besitzt des weiteren eine Schnittstelle 14, welche als eine Ethernetschnittstelle ausgeführt ist. An das Ethernet ist ein Router oder Proxyserver 15 angeschlossen, der über eine Datenleitung 16 mit einem Netzzugang eines ISP 17 (internet Service Provider) verbunden ist, über welchen ein Zugang zum Internet 18 besteht. An das Ethernet ist des weiteren eine lokale OA&M-Einrichtung 21 angeschlossen. Bestandteil der Einrichtung ist weiterhin ein OA&M-Center 19, welches über einen Router/ Proxyserver 20 mit dem Internet 18 (über einen hier nicht dargestellten ISP, der mit dem erstgenannten nicht identisch sein muß) verbunden ist. Das OA&M-Center 19 ist gegebenenfalls für eine Mehrzahl von entfernten Basisstationen 1 vorgehalten.

Die Teilnehmerstationen 4 besitzen eine Schnittstelle zum Airinterface 3 für die drahtlose Verbindung zur Basisstation 1. Der Zugang zum Airinterface 3 erfolgt über eine Antenne 5, die gleichermaßen für den Sende- als auch den Empfangsbetrieb genutzt wird. Des weiteren besitzen die Teilnehmerstationen 4 jeweils ein PSTN-Teilnehmerinterface 6, welches für POTS (TIPIRING, a/b) oder ISDN (Basisanschluß, 2B+D) ausgelegt ist, und ein Ethernet-Interface 8, welches erfindungsgemäß für den Internetzugang bestimmt ist. Das PSTN-Teilnehmerinterface 6 erlaubt den Anschluß von Endgeräten 7 dem Diensttyp entsprechend und nach Wahl des Kunden. Das Ethernet-Interface 8 erlaubt den Anschluß von Rechnern 9 für den direkten Zugang zum Internet, wobei es sich um Einzelrechner oder bei Rechnemetzen um Router, Proxyserver oder Rechner mit einer Proxyserver-Emulation handeln kann.

Figur 2 beschreibt das Kanalschema einer konkreten Ausführung der Erfindung bei Nutzung von CDMA in Verbindung mit TDMITDMA und TDD. Die Codekanäle 90.0 bis 90.n besitzen eine einheitliche Kanalstruktur. Grundstruktur ist ein Frame 91, unterteilt in die Downlinkperiode 92, die Uplinkperiode 93 und einen Slot für Laufzeitausgleich und Startup-Synchronisation 94. Zur besseren Übersicht ist die Zeitachse 96 mit dargestellt. Die Downlinkperiode 92 beinhaltet die Aussendungen der Basisstation 1 (Fig. 1) und die Uplinkperiode 93 die Aussendungen der Teilnehmerstationen 4. Zur Realisierung des TDMITDMA ist der Frame in 15 Slots 95.0 - 95.14 (Fig. 2) gleicher Dauer unterteilt. Die Slots 95.0 - 95.6 sind der Downlinkperiode 92 und die Slots 95.8 - 95.14 der Uplinkperiode 93 zugeordnet. In dieser Kanalstruktur ist der Slot 95.7 mit dem Slot für Laufzeitausgleich und Startup-Synchronisation 94 identisch. Für die Nutzung im Duplexverfahren sind die Slots 95.i paarweise nach dem Schema (i,i+8) mit i=0..6 einander als Nutzkanalpaare zugeordnet.

Figur 3 beschreibt die Struktur eines Multiframe_6 100 (MF_6) für einen Codekanal, basierend auf einem Kanalschema entsprechend Figur 2, die sich aus dem nachfolgenden Nutzungsschema für die Slots 95.0 - 95.6 und die Slots 95.8 - 95.14 ergibt. Dargestellt ist eine Folge von sechs Frames 101.0 - 101.5, die gemeinsam einen MF_6 100 bilden. Die Bezeichnungsweise/Zählweise für die Frames eines MF_6 Nr. i ist MF_6(i,0..5).

Die Figur 3 stellt die identischen Ordnungsschemata für die Slots 95.0 bis 95.6 und Slots 95.8 bis 95.14 dar, beispielhaft erläutert an den Slots 95.0 bis 95.6:

- Die Slots 95.0 bis 95.5 werden als Kanäle für die Nutzdatenübertragung verwendet und sind die kleinste einer Verbindung zuordenbare Einheit. Mehrkanalzuweisungen zur Erhöhung der Übertragungskapazität einer Verbindung sind möglich.
- Der Slot 95.6 wird modulo 6 umlaufend den Slots 95.0 bis 95.5 zugeordnet, womit sich ein MF_6 100 ergibt, der 6 Frames umfaßt.

Damit sind im Frame MF_6(i,j) wie dargestellt jeweils der Slot 95.j und der Slot 95.6 einander zugeordnet. Das Ordnungsschema der Slots 95.8 bis 95.14 ist adäquat und mit gleicher Zählrichtung.

Figur 4 beschreibt die Einordnung der speziellen Kanäle für Synchronisation und Steuerung sowie der Schutzzeit für den Laufzeitausgleich in das TDD und das Kanalschema entsprechend Figur 2. Dargestellt wird der Pool der Codekanäle 90 für die Dauer eines Frame 91. Zur besseren Übersicht ist die Zeitachse 96 mit dargestellt. Im Codekanal 90.0 sind im Slot 95.0 ein BCH 110 (Broadcast Channel) und im Slot 95.7 ein RACH 112 (Random Access Channel) angeordnet. Der Slot 115 wird im Codekanal 90.0 bestimmungsgemäß nicht benutzt.

Dargestellt ist des weiteren, daß der Slot für Laufzeitausgleich und Startupsynchronisation 94 nur im Codekanal 90.0 mit Aussendungen durch den RACH 112 belegt ist, welcher gegenüber der Slotdauer so verkürzt ist, daß die entstehende Lücke noch hinreichend groß für den Laufzeitausgleich ist. In allen weiteren Codekanälen 90.1 bis 90.n wird der Slot für Laufzeitausgleich und Startupsynchronisation 94 bestimmungsgemäß nicht mit Aussendungen belegt. Der Slot 116 des Codekanals 90.0 wird, wenn er im MF_6 100 (Figur 3) dem Slot 95.1 zugeordnet ist, für Broadcastsendungen der Basisstation 1 genutzt. Der Slot 118 des Codekanals 90.0 wird, wenn er im MF_6 100 dem Slot 95.8 zugeordnet ist, nicht genutzt.

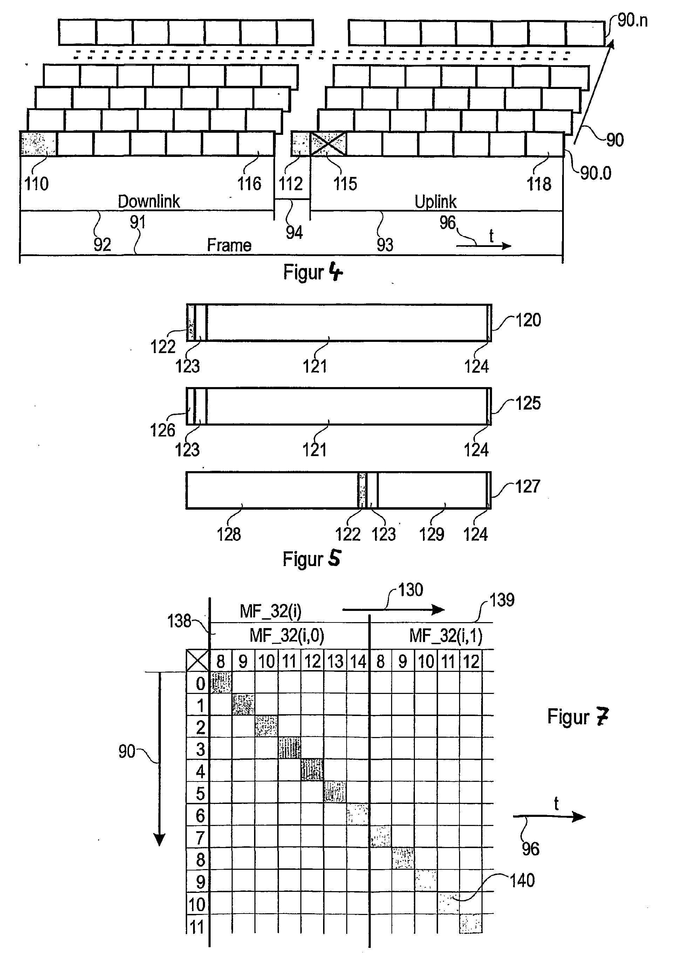

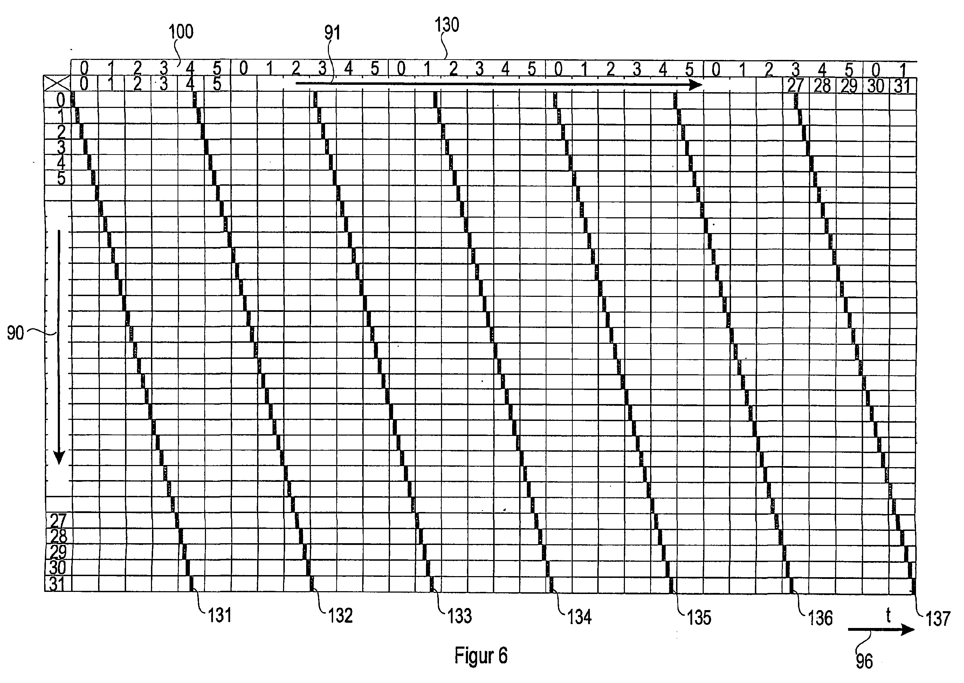

Figur 5 stellt den allgemeinen Aufbau verschiedener Slottypen dar. Der Slottyp 120 wird im Downlink 92 (Figur 2) und in ausgewählten Slots des Uplink entsprechend der Vorschriften des Multiframe 32 (siehe Beschreibung unten) verwendet und umfaßt Präambelsymbole 122, Referenzsymbole 123, eine Packed Data Unit 121 (PDU) und eine Schutzzeit 124. Die Schutzzeit 124 (des jeweils vorangehenden Slots) und die Präambelsymbole 122 werden erfindungsgemäß wie unten beschrieben für die Messung der Kanalimpulsantwort benutzt. Die Referenzsymbole sind optional und dienen der Bestimmung der Parameter für die kohärente Demodulation der Daten. Der Slottyp 125 wird im Uplink 93 verwendet, ausgenommen die durch den MF_32 130 (Figur 6) speziell vorgegebenen Fälle entsprechend der untenstehenden Beschreibung. Der Unterschied zum Slottyp 120 ist, daß an Stelle der Präambelsymbole 122 eine Schutzzeit 126 tritt.

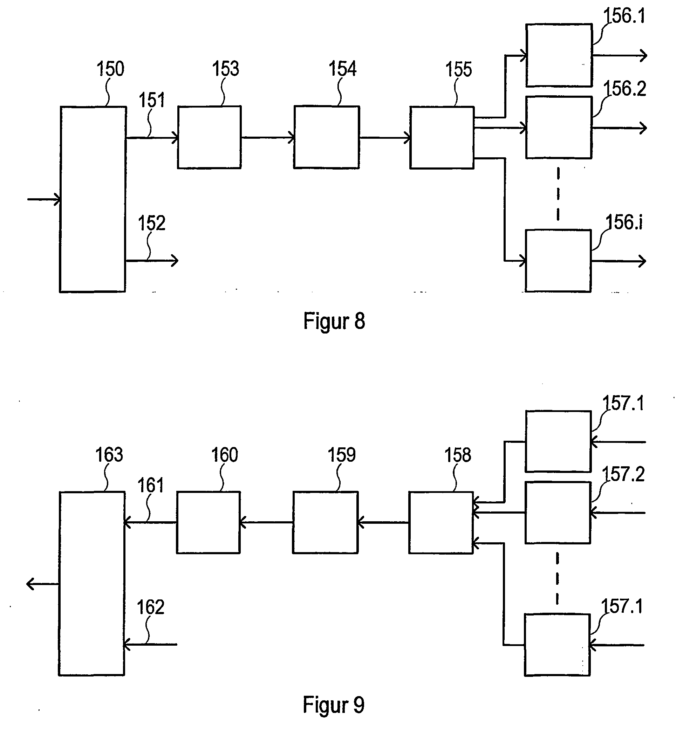

Der Slottyp 127 wird nur als Slot 95.7 im Codekanal 90.0 verwendet und umfaßt die Schutzzeit für Laufzeitausgleich 128 und den RACH 112 (Figur 4) mit der verkürzten Packed Data Unit 129. Figur 6 beschreibt die Struktur und Funktion eines Multiframe_32 (MF_32) 130 für eine Ausführung der Erfindung mit 32 Codekanälen 90. Figur 7 stellt der besseren Erläuterung wegen einen Ausschnitt aus Figur 6 dar. Ein MF_32 umfaßt 32 Frames 91 (Figur 2). Das kleinste gemeinsame Vielfache von MF_32 und MF_6 ist 96 und wird als ein Hyperframe verwendet, der zur eindeutigen Adressierung aller Elemente in der Framestruktur Verwendung findet, so daß sich bei Verwendung eines gemeinsamen Framezählers z = 0..95 eine Numerierung des MF_32 (0..2) und eine Numerierung der MF_6 (0..15) ergibt. Der einzelne Slot im MF_32 hat mit diesen Festlegungen die Bezeichnung MF_32(i,j,k), wobei i die Nummer des MF_32 (0..2), j die Nummer des Frame 91 im MF_32 mit j = z mod 32 und k die Nummer des Slot 95.k, k = 8..14 bedeuten.

Die Funktion eines MF_32 130 ist, eine solche Vorschrift zu schaffen, daß jedem Slot 95.k jedes Codekanals 90 im Uplink 93 (Figur 2) ein Zeitpunkt zugeordnet ist, zu welchem am Anfang dieses Slots und ausschließlich dieses Codekanals von einer Teilnehmerstation 4 die Aussendung von Präambelsymbolen 122 erfolgt. Die Aussendung der Präambeln erfolgt jeweils durch die Teilnehmerstation, welcher der besagte Slot auch für die Nutzung zugewiesen ist.

In Figur 6 ist über den Bereich eines gesamten MF_32 dargestellt, wie im Uplink 93 (Fig. 2) diese Berechtigung zyklisch über alle Codekanäle 90 und Slots 95.8 bis 95.14 derart verteilt wird, daß in jedem Code kanal 90 jeder der Slots 95.8 bis 95.14 mindestens einmal diese Berechtigung erhält. Die Darstellung enthält ausschließlich die Slots 95.8 bis 95.14. So sind dies, erläutert am Codekanal 31, die Slots MF_32(0,4.11) 131, MF_32(0,9,8) 132, MF_32(0,13.12) 133, MF_32(0.18,9) 134, MF_32(0.22.13) 135, MF_32(0,27,10) 136 und MF_32(0,31,14) 137.

Der Zusammenhang zwischen Zählerstand z des Hyperframe, Nummer des Slot k und Nummer des Codekanals c ist durch die Beziehung

$$c = ((z \bmod 32) \cdot 7 + k - 8) \bmod 32$$

gegeben.

In Figur 7 sind die Frames MF_32(i,0) 138 und MF_32(i,1) 139 weiter aufgelöst. Für einen Zählerstand z = 65 und den Slot 11 in diesem Frame ergibt sich nach obiger Beziehung

$$c = ((65 \bmod 32) \cdot 7 + 11 - 8) \bmod 32 = 10$$

Durch diese Beziehung ist eindeutig der Slot MF_32(i,1,11) 140 für die Aussendung der Präambelsymbole bestimmt.

Der Stand des Hyperframezählers wird von der Basisstation 1 entsprechend Möglichkeiten, wenn anderweitig keine Daten zu übertragen sind, als Broadcastsendung im Slot 116 (Figur 4) oder Füllinformation in Signalisierungskanälen übertragen. Damit wird in unregelmäßigen Abständen der Stand des Zählers aktualisiert, in den Zwischenzeiten wird in den Teilnehmerstationen 4 freilaufend weitergezählt. Figur 8 gibt einen Ausschnitt des Empfangstraktes einer Teilnehmerstation 4 (Figur 1) wieder. Der RF-Demodulator 150 demoduliert das RF-Signal und stellt an seinen Ausgängen 151 und152 die I- und Q-Komponenten des Basisbandsignals bereit. An diesen Ausgängen liegt das analoge Summensignal aller im Codemultiplex von der Basisstation ausgesandten Signale an. Im weiteren ist nur die Verarbeitung der 1-Komponente dargestellt, für die Q-Komponente ist eine entsprechende Doppelung vorhanden. Das analoge Ausgangssignal des Demodulators 150 wird in dem A/D-Wandier 153 in ein digitales Signal mit einer Bitbreite n gewandelt. Das Signal wird dem Equalizer/Entzerrer 154 zugeführt und in diesem entzerrt.. Die Anordnung des Entzerrers an dieser Stelle ist vorteilhaft, da das Signal digital vorliegt und direkt in einer digitalen Recheneinheit verarbeitet werden kann. Das entzerrte Signal wird einem Powersplitter 155 übergeben, der die Verteilung auf die Matched Filter 156.1 .. 156.i entsprechend der Anzahl der zu empfangenden Kanäle übergibt und welcher bei einkanaliger Ausführung der Teilnehmerstation 4 entfallen kann.

Figur 9 gibt einen Ausschnitt des Sendetraktes einer Teilnehmerstation wieder. Es ist auch hier nur die Verarbeitung der I-Komponente dargestellt, für die Q-Komponente ist eine entsprechende Doppelung vorhanden. Die CDMA-Spreizungseinrichtungen 157.1 ... 157.i entsprechend der Anzahl der zu sendenden Kanäle spreizen die an ihren Eingängen anliegende I-Komponente der Kanalsignale mit der jeweiligen Codesequenz. Die Signale werden in einem digitalen Summierer 158 summiert, welcher bei einkanaliger Ausführung der Teilnehmerstafion 4 entfallen kann. Der PreequalizerNorentzerrer 159 führt eine Vorentzerrung dieses Summensignals durch. Das vorentzerrte Signal wird in einem DIA-Wandler 160 in ein analoges Signal gewandelt. Die analogen Summensignate des 1- und Q-Zweiges werden an die Eingänge 161 und 162 des RF-Modulators 163 angelegt.

Der besagte Entzerrer 154 (Figur 8) arbeitet mathematisch derart, daß er die Faltung des von der Basisstation 1 (Figur 1) gesendeten Signals mit der Kanalimpulsantwort durch Faltung mit der inversen Kanalimpulsantwort wieder aufhebt. Die Anwendung auf das von der Basisstation gesendete Multiplexsignal ist zulässig, da alle CDMA-Signale im gleichen Frequenzband abgestrahlt werden und identisch mit der individuellen Funkkanalimpulsantwort für die jeweilige Teilnehmerstation 4 gefaltet sind. Die dazu vorausgesetzte Kenntnis der Kanalimpulsantwort wird durch das unten beschriebene erfindungsgemäße Verfahren der Messung/Schätzung realisiert.

Der besagte Vorentzerrer 159 (Figur 9) arbeitet mathematisch derart, daß er eine Faltung des von der Teilnehmerstation 4 zu sendenden Signals mit der inversen Kanalimpulsantwort durchführt, die auf dem Übertragungsweg durch Faltung mit der Kanalimpulsantwort wieder aufgehoben wird. Die Einfügung als Vorentzerrung in der Teilnehmerstation ist zwingend. Die adäquate Einordnung eines Entzerrers im Empfangstrakt der Basisstation scheidet aus, da das dort vorliegende Summensignal die Signale mehrerer Teilnehmerstationen umfaßt und damit nicht die Bedingung erfüllt, daß alle Einzelsignale mit der gleichen Kanalimpulsantwort gefaltet sind.

Da die Entzerrer 154 und Vorentzerrer 159, wie in den Figuren 8 und 9 dargestellt ist, in der gleichen Signalebene angeordnet sind, kommen identische Einrichtungen und Verfahren für beide zum Einsatz. Im ersten Schritt werden auch beide Einrichtungen mit gleichen Entzerrerkoeffizienten, die die inverse Kanalimpulsantwort repräsentieren, betrieben. Da außerdem auf Grund des TDD alternierend empfangen und gesendet wird, werden die Entzerrereinheiten für jeweils I- und Q-Kanal alternierend durch entsprechende Umschaltung der Ein- und Ausgänge dieser Entzerrer und Vorentzerrer zwischen den Einfügepunkten im Empfangs- und Sendezweig alternierend für Empfangen und Senden benutzt. Sofern, wie aus untenstehender Beschreibung weiter hervorgeht, unterschiedliche Koeffizientensätze gelten, so wird in den Umschaltphasen das Laden des jeweils nachfolgend zutreffenden Koeffizientensatzes durchgeführt. Die Anordnung gleicher Entzerrer 154 und Vorentzerrer 159 in der Teilnehmerstation 4 ist in erster Näherung zulässig, da zum ersten auf Grund des TDD in beiden Übertragungsrichtungen gleiche. Frequenzen zum Einsatz kommen, zum zweiten Basisstation und Teilnehmerstation nur je eine Antenne besitzen, die gleichermaßen für Senden und Empfangen benutzt wird, und zum dritten der Übertragungsweg identisch ist, so daß berechtigt die Reziprozität des Funkkanals vorausgesetzt werden kann, was heißt, daß für beide Übertragungsrichtungen die gleiche Kanalimpulsantwort gilt.

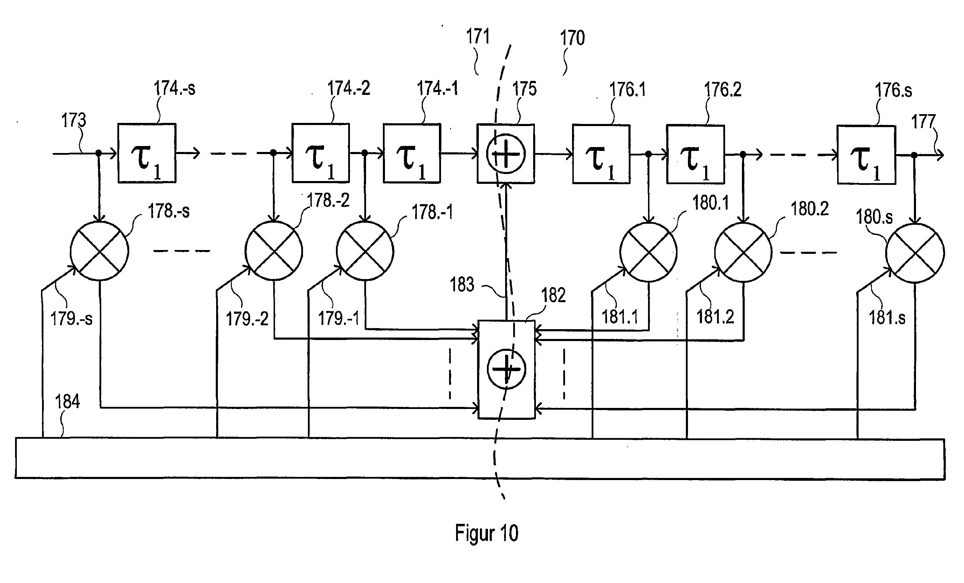

In Figur 10 ist eine aufwandsgünstige Realisierung des Entzerrers 154 (Figur 8) beziehungsweise Vorentzerrers 159 (Figur 9) dargestellt. Die Einrichtung umfaßt einen Entzerrer-Norentzerrerteil 170 mit Rückkopplung und einen Entzerrer-/Vorentzerrerteil 171 mit Vorwärtskopplung, welcher die Möglichkeit des Einsatzes der Einrichtung auch bei Vorliegen eines Nicht-RICE-Kanals schafft. Das zu entzerrende Eingangssignal 173, dessen Abtastwerte im Chiptakt mit einem Abstand von $T_1$, vorliegen, durchläuft eine erste Kette von Verzögerungsgliedern 174.-s ... 174.-1, einen digitalen Summierer 175 und eine zweite Kette von Verzögerungsgliedern 176.1 ... 176.s. Die Anzahl der Verzögerungsglieder in den beiden Teilketten ist jeweils gleich der Sequenzlänge S der für die Messung/Schätzung der Kanalimpulsantwort benutzten Präambelsequenzen 132 (Figur 5).

Diese Festlegung resultiert daraus, daß verfahrensbedingt entsprechend untenstehender Beschreibung zur Messung/Schätzung der Kanalimpulsantwort, bezogen auf ein leistungsmäßig stärkstes Signal, Signale mit einer Verzögerung bzw/und mit einer Vorlaufzeit (Nicht-RICE Kanal) von bis zu jeweils S Chiptakten identifiziert werden können, und dem adäquat die Realisierung der EntzerrerNorentzerrung erfolgt.

Die Verzögerungsglieder werden durch Speicherzellen entsprechend des n Bit breiten Signals gebildet. Die Verzögerung ergibt sich durch die Dauer des Chiptaktes und indem die Speicherzellen als Schieberegisterkette oder in anderer geeigneter Weise betrieben werden. Für höhere Genauigkeiten der EntzerrungNorentzerrung kann die Abtastrate des Signals im A/D-Wandler 153 (Figur 8) zum Beispiel verdoppelt werden, was zur Verdoppelung der zeitlichen Auflösung der EntzerrungNorentzerrung führt, jedoch auch eine beträchtliche Aufwandserhöhung durch eine größere Anzahl von Verzögerungsgliedern und erhöhten Rechenaufwand führt. Voraussetzung ist die Messung/Schätzung der Kanalimpulsantwort mit der adäquaten zeitlichen Auflösung, was mit dem unten beschriebenen Verfahren zur Messung/Schätzung der Kanalimpulsantwort ebenfalls möglich ist.

In dem Entzerrer-/Vorentzerrerteil 171 ist vor jedem der Verzögerungsglieder 174.i eine Signalauskopplung vorhanden. Die ausgekoppelten Signale durchlaufen die digitalen Multiplizierer 178.-s ... 178.-1, wobei sie darin mit den Entzerrerkoeffizienten 179.-s ... 179.-1 multipliziert werden. Die erhaltenen Ergebnisse werden als vorwärtsgekoppelte Signale dem digitalen Summierer 182 zugeführt, dort miteinander und mit den rückgekoppelten Signalen des Entzerrer-/Vorentzerrerteils 170 addiert.

In dem Entzerrer-/Vorentzerrerteil 170 ist nach jedem der Verzögerungsglieder 176.i eine Signalauskopplung vorhanden. Die ausgekoppelten Signale durchlaufen die digitalen Multiplizierer 180.1 ... 180.s, wobei sie darin mit den Entzerrerkoeffizienten 181.1.... 181.s multipliziert werden. Die erhaltenen Ergebnisse werden als rückgekoppelte Signale dem digitalen Summierer 182 zugeführt, dort miteinander und mit den vorwärtsgekoppelten Signalen des Entzerrer-Norentzerrerteils 171 addiert.

Die Summe der rückgekoppelten und vorwärtsgekoppelten Signale wird von dem digitalen Summierer 182 über den Ausgang 183 an einen Eingang des digitalen Summierers 175 übergeben und durch letzteren in den Signalweg additiv eingekoppelt.

Am Ausgang 177 der Einrichtung liegt bei Empfangsbetrieb ein entzerrtes Signal beziehungsweise im Sendebetrieb ein vorentzerrtes Signal vor.

Die Entzerrerkoeffizienten 179.-s ... 179.-1 und 181.1 ... 181.s stellen die inverse Kanalimpulsantwort dar, wobei die Entzerrerkoeffizienten 179.-s ... 179.-1 die Kompensation der auf ein betragsmäßig stärkstes Empfangssignal bezogenen vorlaufenden Signale im Falle eines Nicht-RICE-Kanals, und die Entzerrerkoeffizienten 181.1 ... 181.s die Kompensation der auf ein betragsmäßig stärkstes Empfangssignal bezogenen nachlaufenden Signale bewirken.

Für den einzelnen Signalwert a(t) zum Zeitpunkt t bedeutet das vorstehend beschriebene Verfahren die additive Überlagerung mit den rückgekoppelten und/oder vorwärtsgekoppelten und mit den Entzerrer-Norentzerrerkoeffizienten $K(T_v)$ gewichteten Signalwerten $a(t-T_v)$, $v = -s \dots s$, entsprechend nachfolgender Vorschrift.

$$a(t):=a(t)-\sum_{v=-s}^{s} a(t-\tau_v)*K(\tau_v)$$

Die einzustellenden Wertepaare $[T_v; K(T_v)]$ bzw. Wertetripel $[T_v; K_j(T_v); K_Q(T_v)]$ sind durch die Messung/ Schätzung der Kanalimpulsantwort bestimmt, die unten beschrieben wird.

Die Messung/Schätzung der Kanalimpulsantwort erfolgt während des Downlink 92 (Figur 2) zu Beginn jedes Slot 95.i, i=0..6 an Hand der Präambelsymbole 122 (Figur 5), die von der Basisstation 1 (Figur 1) zu Beginn jedes Slots gesendet werden. Das Verfahren umfaßt die nachfolgend beschriebenen Verfahrensschritte: In einem ersten Verfahrensschritt werden hierzu alle von dem A/D-Wandler 153 (Figur 8) an seinen Ausgängen E31 und E32 jeweils für die 1- und die Q-Komponente gelieferten Abtastwerte/Signalwerte A(j) während der Schutzzeit 124 (Figur 5) und der zwei Präambelsymbole 122 der Recheneinheit 184 (Figur 10) zugeführt und dort gespeichert. Erst anschließend erfolgt "off-line" die Messung/Schätzung der Kanalimpulsantwort. Diese "off-line"-Verarbeitung ist verfahrensbedingt und ergibt sich zwingend aus dem vierten der nachfolgend beschriebenen Verfahrensschritte.

In einem zweiten Verfahrensschritt werden in der Recheneinheit 184 über jeweils S der gespeicherten Signalwerte A(j) Korrelationen mit der bekannten Spreizsequenz der Länge S der Präambelsymbole 122 (Figur 5) durchgeführt. Das Fenster für die S Signalwerte A(i-S+1) bis A(i) wird dabei nach jeder Korrelation um eine Chipposition über den Bereich der gespeicherten Signalwerte A(j) verschoben. Das Ergebnis ist eine Folge von 2*S komplexwertigen Korrelationsergebnissen

$$K(i) = I(i)+Q(i) + j*(I(i)-Q(i)).$$

In einem dritten Verfahrensschritt werden die Absolutbeträge abs[K(i)] dieser Korrelationsergebnisse berechnet, die beiden größten Korrelationsergebnisse ausgewählt und geprüft, ob deren Abstand S Chippositionen beträgt. Falls nicht zutreffend, wird der Vorgang zur Messung/Schätzung der Kanalimpulsantwort für diesen Slot 95.i abgebrochen. Falls zutreffend, wird der erste dieser beiden Werte als K(0) zum Zeitpunkt i=0 definiert. "i" wird in dieser Definition zu der auf die Chipperiodendauer normierten Zeiteinheit. Dem dritten Verfahrensschritt liegt zu Grunde, daß nicht der erste Korrelationspeak, welcher den direkten Ausbreitungsweg charakterisiert, der größte sein muß, und eine Nutzung des größten Korrelationspeaks sinnvoll ist, auch wenn es sich dabei um einen Umwegpfad im Ausbreitungsweg handelt. In einem vierten Verfahrensschritt wird aus

$$K(0) = I(0)+Q(0) + j*(I(0)-Q(0)).$$

rückgerechnet, mit welchen Anteilen die Präambelsequenz in den Signalwerten A(i), i = -1 ... -S, jeweils für die I- und Q-Komponente, enthalten ist. Diese Werte werden jeweils um -S Chippositionen verschoben in die Signalwerte A(i) der Schutzzeit 124, i = -(S+1) ... -2S additiv eingefügt.

In einem fünften Verfahrensschritt werden auf der Grundlage der im vierten Verfahrensschritt korrigierten Werte die Korrelationen für K(-S-1) bis K(-1) neu berechnet.

In einem sechsten Verfahrensschritt werden die Absolutbeträge abs[K(i)] dieser Korrelationsergebnisse berechnet, die drei größten Korrelationsergebnisse ausgewählt und geprüft, ob deren Abstand jeweils S Chippositionen beträgt und deren Positionen i = -S; 0; S betragen. Falls nicht zutreffend, wird der Vorgang zur Messung/Schätzung der Kanalimpulsantwort für diesen Slot 95.i abgebrochen.

In einem siebenten Verfahrensschritt werden die Absolutbeträge abs[K(i)], i ≠ -S; 0; S, auf abs[K(0)] entsprechend der Beziehung

$$N(i) = \frac{abs[I(i)+Q(i)+\frac{1}{S}(I(0)+Q(0))+j*(-I(i)+Q(i)+\frac{1}{S}(-I(0)+Q(0))]}{abs[K(0)]}$$

normiert. Die Vorschrift schließt eine Korrektur zur Berücksichtigung des von K(0) verursachten Offset mit ein.

In einem achten Verfahrensschritt werden alle Korrelationspeaks N(i) > 0,1 im Bereich i = -1 ... -(S-1) gesucht und als Vorläufer $K(i_v)$ des Korrelationspeaks bei K(0) gewertet. Dieser Ansatz hat dadurch eine Berechtigung, daß die durch den Korrelationspeak bei i = -S repräsentierte künstlich eingespeiste Präambelsequenz mit Sicherheit keine Nachläufer besitzt. Somit sind alle in diesem Bereich vorhandenen Korrelationspeaks mit Sicherheit Vorläufer $K(i_v)$, die dem Korrelationspeak K(0) bei i = 0 zuzurechnen sind. In einem neunten Verfahrensschritt werden alle Korrelationspeaks N(i) > 0,1 im Bereich i = 1 ... (S-1) gesucht. Von diesen werden alle die Korrelationspeaks N(i) ausgesondert, für welche gilt

$$i = (i_v + S) \text{ AND } N(i) \approx N(i_v) \text{ AND arctan } \{K(i)\} \approx \text{arctan } \{K(i_v)\},$$

wobei für die Vergleiche der N-Werte eine einstellbare Toleranz von bis zu 10 % und für die Vergleiche der arctan-Werte eine einstellbare Toleranz von bis zu 20 Grad zugelassen wird. Diese Korrelationspeaks werden als Vorläufer $K(i_v)$ des Korrelationspeaks bei K(S) gewertet. Die verbleibenden Korrelationspeaks werden als Nachläufer $K(i_n)$ des Korrelationspeaks bei K(0) gewertet.

Sofern die oben genannte Bedingung für einen oder mehrere Werte $i_v$ nicht erfüllt wird, muß angenommen werden, daß diese im achten Verfahrensschritt ermittelten $K(i_v)$ nicht Vorläufer des Korrelationspeaks bei K(0), sondern Vorläufer des Korrelationspeaks bei K(S) sind. Das Fehlen entsprechender Korrelationspeaks im untersuchten Bereich i = 1 ... (S-1) folgt dann daraus, daß keine dritte Präambel gesendet wurde und somit auch deren Vorläufer fehlen. Die betreffenden $K(i_v)$ werden für diesen Fall verworfen und die Situation als latenter Alarm gespeichert, um bei ungenügender Dienstgüte als Hinweis in der Ursachensuche zu dienen.

In einem zehnten Verfahrensschritt wird die Summe der Absolutbeträge aller zu berücksichtigenden Vorläufer und Nachläufer

$$C = \sum[N(i_v)] + \sum[N(i_n)]$$

gebildet. Zur Gewährleistung der Stabilität des Verfahrens ist eine hinreichende Bedingung, daß die Summe aller Entzerrerkoeffizienten kleiner als das größte Eingangssignal ist, das heißt, daß in der normierten Darstellung für die Summe der Absolutbeträge aller Koeffizienten <1 gilt. Andernfalls könnten als Instabilitäten unkontrolliertes Signalwachstum oder Schwingen auftreten. Diese Bedingung ist nach jeder Koeffizientenbestimmung zu prüfen.

Sofern C < 1 gilt, können alle derart bestimmten Vor- und Nachläufer berücksichtigt werden, wobei die Berechnung der komplexen Equalizerkoeffizienten nach der Beziehung

$$E(i_{v,n}) = \frac{I(i)+Q(i)+\frac{1}{S}(I(0)+Q(0))+j*(-I(i)+Q(i)+\frac{1}{S}(-I(0)+Q(0))}{abs[K(0)]}$$

erfolgt, wobei die in den Equalizern der 1-Komponente 154 (Figur 8) und der Q-Komponente zu benutzenden Koeffizienten

$$E_I(i_{v,n}) = \Re[E(i_{v,n})] \qquad E_Q(i_{v,n}) = \Im[E(i_{v,n})]$$

betragen.

Sofern sich C > 1 ergibt, so kommen zwei unterschiedliche Verfahren zur Bestimmung der zu berücksichtigenden Equalizerkoeffizienten zur Anwendung. Die Verfahrensauswahl kann über Networkmanagementfunktionen vorgenommen werden, wobei das Auswahlkriterium die gegebenenfalls unterschiedliche Auswirkung auf die BER (Bit Error Rate) ist. Das erste Verfahren ist die Defaulteinstellung. Eine erste Verfahrensvariante beinhaltet, daß von den $N(i_v)$ und $N(i_n)$ die größten Werte so lange berücksichtigt werden, wie die Bedingung C < 1 dies zuläßt und alle weiteren $N(i_v)$ und $N(i_n)$ unberücksichtigt bleiben.

Eine zweite Verfahrensvariante beinhaltet, daß korrigierte Koeffizienten nach folgender Vorschrift berechnet werden.

$$E^*(i_{v;n}) = \frac{E(i_{v;n})}{C} \quad mit \quad E_I^*(i_{v;n}) = \frac{\Re[E(i_{v;n})]}{C} \quad und \quad E_Q^*(i_{v;n}) = \frac{\Im[E(i_{v;n})]}{C}$$

Diese Verfahrensvariante hat zur Folge, daß alle $E(i_{v;n})$ Berücksichtigung finden, jedoch alle um den Faktor 1/C reduziert.

Zum Verfahren der Messung/Schätzung der Kanalimpulsantwort und den einzelnen Verfahrensschritten gelten die nachfolgende Erläuterungen.

Der zweite Verfahrensschritt geht davon aus, daß erfindungsgemäß die Präambelsymbole 122 (Figur 5) für alle CDMA-Kanäle 90 (Figur 2) identisch und mit der gleichen Sequenz gespreizt sind, so daß die additiv überlagerte Aussendung mit höherem Pegel als bei den Nutzdaten des einzelnen CDMA-Kanals erfolgt und somit in den Teilnehmerstationen 4 der Empfang mit einem höheren S/N-Verhältnis erfolgt. Hierdurch und durch den Prozeßgewinn bei der Korrelation sind Vor- und Nachläufer der Datensymbole so gedämpft, daß sie die Messung/Schätzung der Kanalimpulsantwort nicht beeinflussen können. Ein weiterer Vorteil besteht darin, daß die Präambelsymbole nicht durch Aussendungen weiterer Sequenzen überlagert sind. Zusätzlich ist vor den Präambelsymbolen jeweils eine Schutzzeit 124 (Figur 5) eingefügt, so daß Intersymbol-Interferenz mit Umwegsignalen der vorangehenden Aussendungen weitgehend vermieden werden. Alle genannten Aspekte erhöhen die Genauigkeit der Detektion.

Die Spreizungssequenz der Länge S ist eine Maximalfolge, die wie oben beschrieben ein Leistungsmaximum der Kreuzkorrelationsfunktion aufweist, wenn die Codephasen des Empfangssignals und der im Empfänger gespeicherten Vergleichssequenz übereinstimmen, und für welche bei allen anderen Codephasen die Kreuzkorrelationsfunktion sehr kleine Werte (1/S « 1) aufweist.

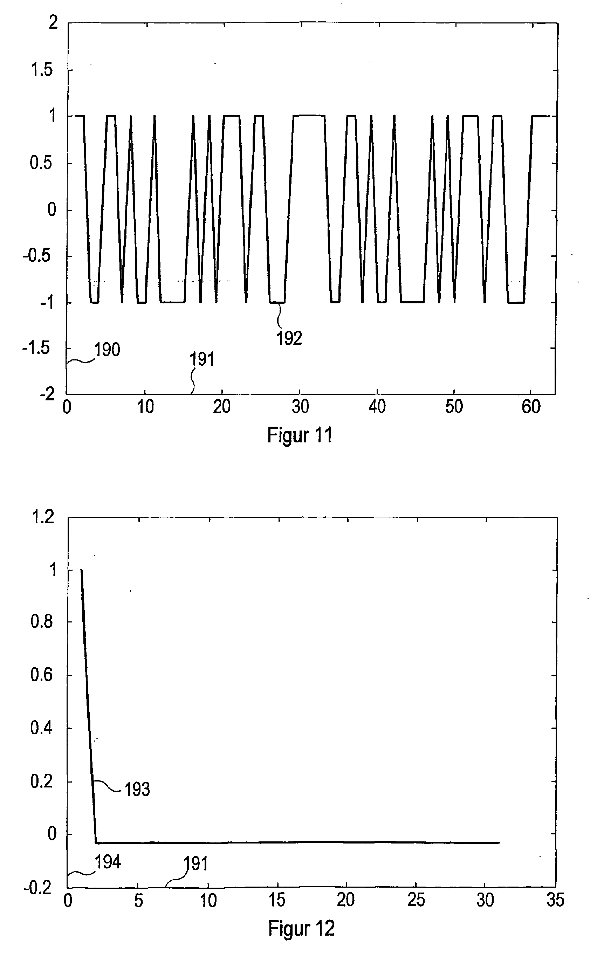

Aufgrund der spezifischen Korrelationseigenschaften derartiger Maximalfolgen ergibt sich dadurch ein nahezu adäquates Abbild der Funkkanalimpulsantwort. In Figur 11 ist ein solches Spreizungssignal 192 über zwei Symbollängen dargestellt, wobei S den Wert 31 hat und in der Darstellung die Amplitudenwerte durch die Skale 190 und Chippositionen durch die Skale 191 wiedergegeben werden.

Entsprechend Darstellung in Figur 12 ergibt sich bei einem ungestörten Übertragungskanal für eine Symbollänge eine Kanalimpulsantwort 193, wobei die Amplitudenwerte durch die Skale 194 und Chippositionen durch die Skale 191 wiedergegeben werden. Die Korrelationspeaks der Kanalimpulsantwort 193 an der Chipposition 1 und für das zweite Präambelsymbol an der Chipposition 32, in Figur 12 nicht mehr dargestellt, werden außerdem zur Synchronisation des Chiptaktes der Teilnehmerstation 4 (Figur 1) benutzt. Der reale Funkkanal wird in der Regel ein Mehrwegefunkkanal sein, der über die allgemein komplexwertige Impulsantwort in der Basisbandlage beschrieben werden kann:

$$c(t) = \delta_0(t) + \sum_{v=1}^{n} r_v * \delta_0(t-\tau_v)$$

Hierbei wird für n Umwegsignale von normierten komplexen Reflektionsfaktoren $r_v$ und der zugehörigen Umwegverzögerung $T_u$ der Reflexionspunkte v =1 1 .. n ausgegangen. Die Kanalimpulsantworten $r_v * \delta_0(t-T_u)$ der Umwegsignale überlagern sich entsprechend dem Superpositionsgesetzt mit der Kanalimpulsantwort des direkten Pfades $\delta_0(t)$ zu der Kanalimpulsantwort des Mehrwegefunkkanals c(t).

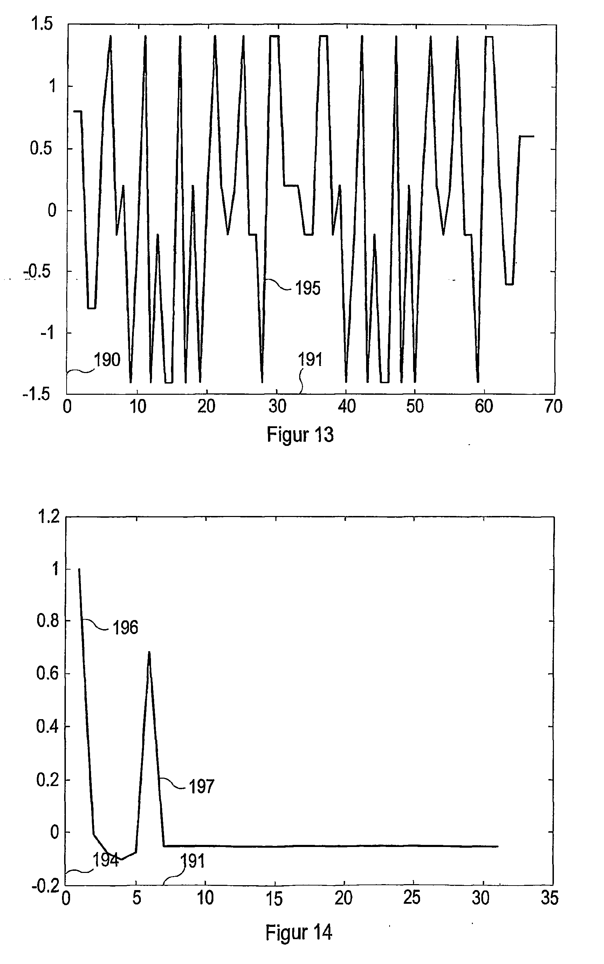

In Figur 13 ist ein Empfangssignal 195 dargestellt, wie es sich bei einer Ausbreitung über den direkten Pfad und einen Umwegpfad mit einem Reflexionsfaktor $r_v$ = 0,75 und einer Verzögerung $T_u$ = 5 Chiptakte ergibt. In der Darstellung werden die Amplitudenwerte durch die Skale 190 und Chippositionen durch die Skale 191 wiedergegeben. Bei einer generellen Normierung der Verzögerung auf die Einheit Chiptakt ergibt sich die Kanalimpulsantwort dieses Funkkanals mit

$$c(t) = \delta_0(t) + 0{,}75 * \delta_0(t-5*\tau_1)$$

In Figur 14 ist das Korrelationsergebnis entsprechend dem oben beschgriebenen Verfahren dargestellt. Deutlich sind der Korrelationspeak 196 des direkten Pfades an der Chipposition 1 und der Korrelationspeak 197 des Umwegpfades an der Chipposition 6 zu erkennen. In der Darstellung werden die Amplitudenwerte durch die Skale 194 und Chippositionen durch die Skale 191 wiedergegeben.

Werden alle Korrelationswerte vernachlässigt, deren Beträge kleiner 0.1 sind, so ist lediglich der Korrelationspeak 197 an der Chipposition 6 zu betrachten, dessen normierte Amplitude 0.685 beträgt. Der Absolutwert entspricht in diesem Fall mit einer relativen Ungenauigkeit von lediglich 10% dem tatsächlichen Wert der Kanatimpulsantwort. Zur Korrektur wird der Offset vom Nullwert entsprechend obenstehender Formeln berücksichtigt, so dass sich ein korrigierter Amplitudenwert von 0.717 ergibt und der relative Fehler nur noch 5% beträgt. Diese Korrekturen sind in dem siebenten Verfahrensschritt zur Berechnung der N(i) und im elften Verfahrensschritt zur Berechnung der E(i) eingefügt. Da in dem gewählten Beispiel das Maximum zum Zeitpunkt 1 auftrat, ist ein Koeffizient 180.5 (Figur 10) von -0.717 im fünften digitalen Multiplizierer 181.5 der Einrichtung nach Figur 10 einzustellen. Die Koeffizienten aller anderen Multiplizierer werden zu Null gesetzt. Für komplexwertige Reflexionsfaktoren $r_v$ ergeben sich unterschiedliche Korrelationsergebnisse in den I- und Q-Zweigen. Die Entzerrung mit den jeweils daraus abgeleiteten Koeffizienten realisiert dann die komplexwertige Entzerrung/Vorentzerrung.

Die vorstehenden beispielhaften Betrachtungen wurden für einen RICE-Kanal gemacht, das heißt, daß die betragsmäßig größte Amplitude mit der kürzesten Signallaufzeit verbunden ist. Für einen Nicht-RICE-Kanal hätte eine der nachfolgenden Amplituden des Umwegpfades v = j, verbunden mit der Verzögerung $T_j$ den größten Wert. Verfahrensmäßig wird das Korrelationsergebnis entsprechend Figur 14 dahingehend geprüft. Bei Feststellung dieses Falles wird diese betragsmäßig größte Amplitude als Bezugsamplitude gewählt, woraus für die Darstellung der Kanalimpulsantwort folgt

$$c(t+\tau_j) = \delta_0(t+\tau_j) + \sum_{v=1}^{n} r_v * \delta_0(t+\tau_j-\tau_v)$$

Damit erhalten alle zeitlich vor dieser betragsmäßig größten Amplitude liegenden Amplituden eine negative Verzögerung. Die diesen Amplituden zugeordneten Koeffizienten werden entsprechend diesen negativen Verzögerungen den digitalen Multiplizierern 178.-s ... 178.-1 dem Entzerrer-/Vorentzerrerteil 171 (Figur 10) zugeordnet. Auch für diesen Fall gelten alle genannten Bedingungen zur Gewährleistung der Stabilität des Verfahrens wie oben dargestellt. Die Chipposition der derart preferierte Amplitude an der Chipposition $T_j$ ist damit auch für die Synchronisation des Chiptaktes und die Sequenzsynchronisation der Teilnehmerstation 4 (Figur 1) gültig.

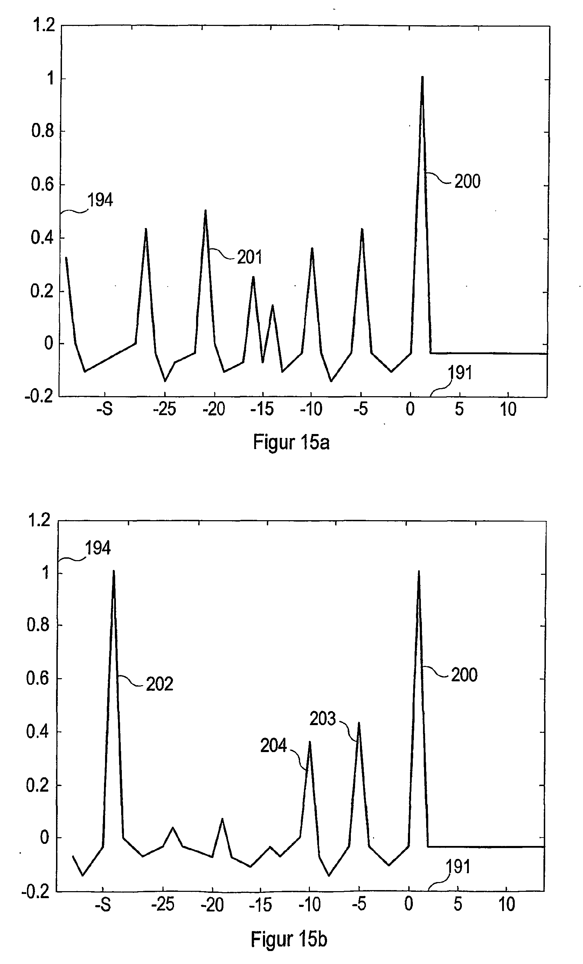

Figur 15a und 15b veranschaulichen die Wirkungen der Einfügung einer Präambelsequenz in den Chippositionen i = -(S+1) ... -2S entsprechend viertem Verfahrensschritt und Neuberechnung der Korrelationswerte K(i) entsprechend fünftem Verfahrensschritt. In den Darstellungen werden die. Amplitudenwerte durch die Skale 194 und Chippositionen (i) durch die Skale 191 wiedergegeben.

In Figur 15a ist der Verlauf der K(i) 201 entsprechend Berechnung im dritten Verfahrensschritt dargestellt. Es zeigt sich ein stochastischer Verlauf vor dem Korrelationspeak 200 der ersten Präambel, bedingt dadurch, daß vor der ersten der real gesendeten Präambeln 132 eine Schutzzeit 124 ohne Signal liegt. Erst nach dem Korrelationspeak 200, der die erste real gesendete Präambel 132 repräsentiert, treten entsprechend Korreiationseigenschaften der Präambelsequenzen derartige Störungen nicht mehr auf.

In Figur 15b ist der Verlauf der K(i) nach Einfügung einer Präambelsequenz entsprechend viertem Verfahrensschritt und Neuberechnung der K(i) entsprechend fünftem Verfahrensschritt dargestellt. Der Korrelationspeak 202 repräsentiert die eingefügte Präambelsequenz und es ist erkennbar, daß die Einfügung zu einer Unterdrückung/Minderung der stochastischen Störungen führt. Die verbleibenden Korrelationspeaks 203 und 204 sind entsprechend nicht den stochastischen Störungen zuzurechnen. Da die eingefügte Präambel, da nicht über den realen Übertragungskanal übertragen, keine Nachläufer besitzt, sind diese Korrelationspeaks mit Sicherheit als Vorläufer des Korrelationspeaks 200 zu werten. Das Verfahren erlaubt damit entsprechend den achten und neunten Verfahrensschritten vorteilhaft beziehungsweise überhaupt erst die Unterscheidung von Vor- und Nachläufem des stärksten Signals.

Eine erste zu beachtende Bedingung des erfindungsgemäßen Verfahrens ist, daß nur Vorlaufzeiten $i_{(v)}$ bis zur Größe einer Symboldauer S ermittelt werden können, worauf die maximale Verzögerung des Equalizerteils 171 (Figur 10) abgestimmt ist. Eine zweite zu beachtende Bedingung des erfindungsgemäßen

Verfahrens ist, daß nur Nachlaufzeiten i$(_n)$ bis zur Größe einer Symboldauer S ermittelt werden können, worauf die maximale Verzögerung des Equalizerteils 170 (Figur 10) abgestimmt ist. Darüber hinausgehende Vorlauf-/Verzögerungszeiten können verfahrensmäßig nicht kompensiert werden. Wenn zutreffend wird auf Grund einer möglicherweise dadurch bedingten Erhöhung der BER (Bit Error Rate) durch das Networkmanagement diese Aussage zur Ursachenfeststellung mit herangezogen und mit Wahl eines neuen

Übertragungsweges durch Veränderung des Antennenstandortes oder einer anderen Antenne reagiert werden.

CDMA-Verfahren besitzen bezüglich der Einhaltung dieser Bedingungen günstigere Voraussetzungen als TDMA-Verfahren, da bei gleicher zu übertragender Datenmenge CDMA-Verfahren diese Datenmenge in S überlagerten Kanälen übertragen, wobei S die Anzahl der verwendeten Codesequenzen ist. Damit reduziert sich die Symbolrate gegenüber TDMA-Verfahren um diesen Faktor S. So ergibt sich in einer konkreten Ausführung bei S=32 und einer Symbolrate von 120 kSymbolen/s und einer angenommenen maximalen Umweglänge von 2,5 km, was einer Umweglaufzeit von 8,3 $\mu$s entspricht, ein Produkt

$$\Pi_{DS}=\text{Symbolrate*Umweglaufzeit}= 1,$$

was die Einhaltung der oben genannten Bedingung charakterisiert. Für ein TDMA-Verfahren gleicher Kapazität würde sich $\Pi_{DS}$=32 ergeben.

Die Messung/Schätzung der Kanalimpulsantwort erfolgt während des Downlink 92 (Figur 2) zu Beginn jedes Slot 95.i, i=0..6 an Hand der Präambelsymbole 122 (Figur 5), die von der Basisstation 1 (Figur 1) zu Beginn jedes Slots gesendet werden. Durch die ständige Wiederholung der Messung/Schätzung erfolgt eine Adaption an Veränderungen des Übertragungskanals. In der Regel erfolgen in einem stationären System Veränderungen des Übertragungskanals relativ zur Dauer eines Slot 95.i (Figur 4) und auch zur Länge eines Frame 91 langsam. Erfindungsgemäß wird aus diesem Grunde eine gleitende Mittelwertbildung über mehrere Messungen/Schätzungen mit einer Fenstergröße n durchgeführt und dadurch der Einfluß von stochastischen Störungen gemindert. Parallel zur gleitenden Mittelwertbildung und unabhängig von dieser werden Änderungen einer Transientenbetrachtung unterzogen. Sofern daraus der Rückschluß auf schnellere Änderungen abgeleitet wird, erfolgt eine Verringerung der Fenstergröße n, um diesen Änderungen auch mit höherer Geschwindigkeit zu folgen. Ursachen für schnellere Änderungen auch in einem als stationär bezeichneten System mit stationären Endstellen können Flugverkehr, Verkehr größerer Landfahrzeuge oder andere Einflüsse im Übertragungsweg sein.

In der Regel kann, wie bereits oben ausgeführt, von der Reziprozität des Übertzragungskanals ausgegangen werden. In dem oben genannten ersten Verfahrensschritt zur Durchführung der Vorverzerrung werden deshalb für die Vorentzerrung im Uplink 93 (Figur 2) die gleichen Koeffizienten 181.1 ... 181.s (Figur 10) und 179.-s ... 179.-1 benutzt, wie sie durch die Messung/Schätzung der Kanalimpulsantwort im Downlink 92 (Figur 2) ermittelt wurden. Dieser erste Verfahrensschritt kommt zur Anwendung in der Startphase bei Aktivierung einer Teilnehmerstation 4 (Figur 1) zum Zwecke eines Verbindungsaufbaus. Die Ergebnisse der Messung/Schätzung der Kanalimpulsantwort im Downlink stehen zu diesem Zeitpunkt zur Verfügung, da die Teilnehmerstation 4 auch in der Inaktivitätsphase die Basisstation 1 empfängt und die Messung/Schätzung der Kanalimpulsantwort kontinuierlich durchführt.

Abweichungen von der Regel können auftreten, wenn die Empfänger und/oder die. Sender jeweils in Basisstation 1 und in der Teilnehmerstation 4 abweichende Parameter besitzen oder in den beiden Übertragungsrichtungen unterschiedliche Frequenzen benutzt werden. Es werden deshalb in einem zweiten Verfahrensschritt in der Basisstation 1 für jede aktive Teilnehmerstation 4 deren individuelle Kanalimpulsantwort ermittelt, die Koeffizienten und zugehörigen Verzögerungszeiten für die in dieser Teilnehmerstation durchzuführende Vorentzerrung bestimmt und über den Signalisierungskanal 95.6 (Figur 3) oder in einer speziellen Signalisierungsmessage bei Paketdatenübertragung an die jeweilige Teilnehmerstation übertragen. Dieser zweite Verfahrensschritt basiert darauf, daß in dem besagten Multiframe_32 130 (Figur 6) jedem Slot 95.8 ... 95.13 (Figur 2) jedes Codekanals 90 im Uplink 93 ein Zeitpunkt zugeordnet ist, zu welchem vor diesem Slot ausschließlich dieses Codekanals von einer Teilnehmerstation 4 die Aussendung von Präambelsymbolen erfolgt. Die Aussendung erfolgt jeweils durch die Teilnehmerstation, welcher der Slot auch für die Nutzung zugewiesen ist. In der Teilnehmerstation, die diese Präambelsymbole aussendet, wird zu diesem Zweck und für diese Zeit die Vorentzerrung abgeschaltet. Die Präambelsymbole, Spreizungssequenzen sowie Einrichtung und Verfahren zur Bestimmung der Kanalimpulsantwort in der Basisstation 1 sind identisch mit den obigen Ausführungen zur Messung/Schätzung der Kanalimpulsantwort des Downlink 92 (Figur 2). Die Basisstation besitzt zu diesem Zweck genau eine Einrichtung, die eine feste Einstellung für Messung/Schätzung der Kanalimpulsantwort entsprechend den Beschreibungen zum Verfahren in den Teilnehmerstationen 4 besitzt. Diese Einrichtung führt vor jedem Slot des Uplink 93 (Figur 2) an Hand der von den unterschiedlichen Teilnehmerstationen übertragenen Präambelsymbole die Messung/Schätzung von deren individueller Kanalimpulsantwort durch. Die von der Basisstation 1 ermittelten Koeffizienten ersetzen in der Teilnehmerstation 4 für die Übertragung im Uplink 93 die von der Teilnehmerstation 4 vorher benutzten Koeffizienten 181 und 179 aus der Messung/Schätzung der Kanalimpulsantwort im Downlink 92.

Bezugszeichenliste

| | |
|------|---|
| 1 | Basisstation |
| 2 | Antenne der Basisstation |
| 3 | Airinterface |
| 4 | Teilnehmerstation |
| 5 | Antenne der Teilnehmerstation |
| 6 | PSTN-Teilnehmerinterface der Teilnehmerstation |
| 7 | Endgerät des Teilnehmers |
| 8 | Ethernetschnittstelle der Teilnehmerstation |
| 9 | Rechner oder Rechnernetz des Teilnehmers |
| 10 | PCM-Schnittstelle der Basisstation |
| 11 | Optionale Anschaltbaugruppen |
| 12 | Ortsvermittlungszentrale |
| 13 | PSTN (Publik Switched Telephone Network) |
| 14 | Ethernetschnittstelle der Basisstation |
| 15 | Router |
| 16 | Datenleitung |
| 17 | ISP (Internet Service Provider) |
| 18 | Internet |
| 19 | OA&M-Center |
| 20 | Router/Proxyserver |
| 21 | Lokale OA&M-Einrichtung |
| 90 | Codekanäle 0..n des CDMA-Verfahrens |
| 90.i | Codekanal Nr. i des CDMA-Verfahrens |
| 91 | Duplexframe |
| 92 | Downlinkperiode im Duplexframe |
| 93 | Uplinkperiode im Duplexframe |
| 94 | Slot für Laufzeitausgleich und Startup-Synchronisation |
| 95 | Slots 0..15 des TDMA-Verfahrens |
| 95.i | Slot Nr. i des TDMA-Verfahrens |
| 96 | Zeitachse |
| 100 | Multiframe_6 |
| 101 | Frames eines MF_6 |
| 101.i | Frame i eines MF_6 |
| 110 | BCH_1, Broadcast Channel |
| 112 | RÄCH, Random Access Channel |
| 115 | bestimmungsgemäß ungenutzter Slot |
| 116 | dem BCH 112 im MF_6 zugeordneter Downlink-Signalisierungsslot |
| 118 | dem Slot 115 im MF_6 zugeordneter Uplink-Signalisierungsslot |
| 120 | Slottyp mit Präambelsymbolen |
| 121 | Packed Data Unit PDU |
| 122 | Präambelsymbole |
| 123 | Referenzsymbole |
| 124 | Schutzzeit für Slottrennung |
| 125 | Slottyp ohne Präambelsymbole |
| 126 | Schutzzeit an Stelle von Präambelsymbolen |
| 127 | Slottyp im Slot 95.7 |
| 128 | Schutzzeit für Laufzeitausgleich |
| 129 | Verkürzte Packed Data Unit des RACH 112 |
| 130 | Multiframe_32 |
| 131 | Slot für Synchronisationsmessung MF_32(0,4,11) |
| 132 | Slot für Synchronisationsmessung MF_32(0,9,8) |

133 Slot für Synchronisationsmessung MF_32(0,13,12)
134 Slot für Synchronisationsmessung MF_32(0,18,9)
135 Slot für Synchronisationsmessung MF_32(0,22,13)
136 Slot für Synchronisationsmessung MF_32(0,27,10)
137 Slot für Synchronisationsmessung MF_32(0,31,14)
138 Frame MF_32(i,0,8..14)
139 Frame MF_32(i,1,8..14)
140 Slot MF_32(i,1,11) eines Multiframe_32
150 RF-Demodulator
151 I-Komponente des Basisbandsignals, Empfangszweig
152 Q-Komponente des Basisbandsignals, Empfangszweig
153 A/D-Wandler
154 Equalizereinrichtung
155 Powersplitter
156 Matched Filter
157 CDMA-Spreizungseinrichtung
158 Digitaler Summierer
159 Preequalizereinrichtung
160 D/A-Wandler
161 I-Komponente des Basisbandsignals, Sendezweig
162 Q-Komponente des Basisbandsignals, Sendezweig
163 RF-Modulator
170 Entzerrerteil mit Rückkopplung
171 Entzerrerteil mit Vorwärtskopplung
173 Eingangssignal des Entzerrers
174 Verzögerungsglieder der ersten Kette von Verzögerungsgliedem
175 Digitaler Summierer
176 Verzögerungsglieder der zweiten Kette von Verzögerungsgliedern
177 Ausgangssignal des Entzerrers
178 Digitaler Multiplizierer
179 Entzerrerkoeffizient
180 Digitaler Multiplizierer
181 Entzerrerkoeffizient
182 Digitaler Summierer
183 Summe der rückgekoppelten und vorwärtsgekoppelten Signalanteile
184 Digitale Recheneinheit
190 Skale des Amplitudenwertes
191 Skale der Chipposition
192 Spreizungssignal
193 Kanalimpulsantwort des ungestörten Kanals
194 Skale der Korrelationswerte
195 Empfangssignal mit einem Umwegsignal
196 Korrelationspeak des direkten Pfades
197 Korrelationspeak des Umwegpfades
200 Korrelationspeak der ersten real gesendeten Präambel
201 Kanalimpulsantwort des unbelegten Kanals
202 Kanalimpulsantwort einer rechnerisch eingefügten Präambel
203 Vorläufersignal eines Nicht-RICE-Kanals
204 Vorläufersignal eines Nicht-RICE-Kanals

**Patentansprüche**

1. Verfahren für die Bestimmung der Kanalimpulsantwort und die Kompensation von Störungen durch Mehrwegeausbreitung im Airinterface eines drahtlosen Kommunikationssystems, welches Kommunikationssystem eine Basisstation (1), ein Airinterface (3) und eine Vielzahl von Teilnehmerstationen (4) umfaßt, und dessen Teilnehmerstationen sowohl über ein Teilnehmerinterface (6) für den Zugang zum PSTN und ein Ethernetinterface (8) für den Zugang zum Internet verfügen, die unabhängig voneinander und auch simultan nutzbar sind, und welches Kommunikationssystem sowohl ein Zugangsnetzwerk zum PSTN und ein Zugangsnetzwerk zum Internet umfaßt, wobei die Kapazitätsverteilung zwischen beiden Zugangsnetzen belastungsabhängig angepaßt wird und die Übertragung im Airinterface mit DS CDM/CDMA und einem eingebetteten TDM/TDMA und TDD erfolgt, **dadurch gekennzeichnet, daß** in der Downlinkrichtung (92) des Airinterface des besagten Kommunikationssystems in der Teilnehmerstation eine Bestimmung der individuellen Kanalimpulsantwort des Funkkanals, Bestimmung von Equalizerkoeffizienten und die Equalization erfolgen, indem

(a) von der Basisstation jeder Timeslot (95) mit der Aussendung mindestens eines oder zweier Präambelsymbole (122) eingeleitet wird, welche Präambelsymbole mit einer Codesequenz gespreizt sind, die nicht mit der Codesequenz für die nachfolgende Nutzdatenübertragung identisch ist,

(b) in der Teilnehmerstation die Aussendungen der Basisstation empfangen, demoduliert und in die I- und Q-Signalkomponenten (151, 152) aufgesplittet werden,

(c) die I- und Q-Signalkomponenten einer A/D-Wandlung unterzogen werden und diese A/D-Wandlung mit einer Samplingrate mindestens gleich dem Chiptakt oder einem Oversampling mit einem ganzzahligen Vielfachen des Chiptaktes erfolgt,

(d) die digitalisierten I- und Q-Eingangssignale gespeichert werden,

(e) die digitalisierten I- und Q-Eingangssignale in je einem Korrelator in einem ersten Durchlauf für alle Empfangszeitpunkte mit der Präambelsequenz korreliert werden,

(f) aus den jeweils zeitgleichen Korrelationswerten der beiden Korrelatoren eine erste Berechnung der komplexen Werte der Kanalimpulsantwort erfolgt, die durch Real- und Imaginärteil und ihre Zeitlage zu einem zunächst willkürlichen Bezugszeitpunkt charakterisiert sind,

(g) aus den komplexen Werten der Kanalimpulsantwort Absolutbeträge berechnet werden,

(h) geprüft wird, ob eine Anzahl, welche gleich der Anzahl der gesendeten Präambelsymbole ist, von größten Werten existiert, deren zeitlichen Abstände jeweils der Dauer einer Präambelsequenz entsprechen und andernfalls die Messung verworfen wird,

(i) der zeitlich erste dieser größten Werte ausgewählt und sein Empfangszeitpunkt als der Bezugszeitpunkt Null festgelegt wird,

(j) in die Folgen der gespeicherten digitalisierten Eingangssignale der I- und Q-Zweige Daten eingefügt werden, die dem virtuellen Empfang einer Präambelsequenz entsprechen, welche über einen optimalen, ungestörten Kanal übertragen wurde, und die gegenüber der Präambelsequenz, die durch den vorgenannten Korrelationspeak zum Zeitpunkt Null repräsentiert wird, um eine Sequenzlänge vorab übertragen wurde, indem

• aus den I- und Q-Korrelationswerten des vorgenannten Korrelationspeaks zum Zeitpunkt Null eine Rückrechnung erfolgt, mit welchen Anteilen der durch diesen Korrelationspeak charakterisierte Empfang einer Präambelsequenz im Zeitraum einer Sequenzlänge vor dem Zeitpunkt Null in den digitalisierten Eingangssignalen jeweils in den 1- und Q-Zweigen enthalten ist und

• die derart berechneten Anteile des vorgenannten Korrelationspeaks um die Dauer einer Sequenzlänge zeitlich vorverlegt in die gespeicherten digitalisierten Eingangssignale der I- und Q-Zweige additiv eingefügt werden,

(k) die wie vorgenannt ergänzten Folgen der digitalisierten Eingangssignale der I- und Q-Zweige in einem zweiten Durchlauf über alle veränderten Werte mit der Präambelsequenz korreliert werden,

(l) aus den jeweils zeitgleichen Korrelationswerten der beiden Korrelatoren eine zweite Berechnung der komplexen Werte der Kanaliumpulsantwort erfolgt, die durch Real- und Imaginärteil und ihre Zeitlage zu dem vorgenannten Bezugszeitpunkt Null charakterisiert sind,

(m) aus den komplexen Werten der solcher Art korrigierten Kanalimpulsantwort erneut die Absolutbeträge berechnet werden,

(n) geprüft wird, ob eine Anzahl, welche gleich der Summe von Anzahl der gesendeten Präambelsymbole und einem virtuellen Präambelsymbol ist, von größten Werten existiert, deren zeitlichen Abstände jeweils der Dauer einer Präambelsequenz entsprechen und bei deren zweiten Wert die Zeitlage mit dem Bezugszeitpunkt Null zusammenfällt und andernfalls die Messung verworfen wird,

(o) alle vorgenannten Absolutbeträge, ausgenommen die wie vorgenannt ermittelten größten Werte, ausgewählt und auf den Absolutbetrag zum Zeitpunkt Null normiert werden, und eingeschlossen in diesen Verfahrensschritt eine Korrektur zur Berücksichtigung des Offsets erfolgt, welches von dem Präambelsymbol verursacht wird, welches durch den Korrelationspeak mit dem Bezugszeitpunkt Null charakterisiert wird,

(p) aus den derart ausgewählten und korrigierten Absolutbeträgen als zu berücksichtigende Parameter der Kanalimpulsantwort alle die ausgewählt werden, welche eine voreinstellbare Schwelle überschreiten,

(q) die Bestimmung der dem Korrelationspeak am Bezugszeitpunkt Null vorauseilenden Signale erfolgt, wobei

• im Falle der Sendung nur eines Präambelsymbols am Anfang jedes Timeslots alle vor dem Bezugzeitpunkt Null liegenden Korrelationspeaks, oder

• im Falle der Sendung zweier Präambelsymbole am Anfang jedes Timeslots ein erstes Zeit-/Pegel-muster der vor dem Bezugszeitpunkt Null liegenden Korrelationspeaks mit einem zweiten Zeit-/Pegel-muster verglichen wird, welches um die Dauer einer Präambelsequenz verschoben ist, und alle Korrelationspeaks des erstes Zeit-/Pegel-musters, welche Entsprechungen in dem zweiten Zeit-/Pegel-muster haben,

als vorauseilende Signale und ihr Abstand zum Bezugszeitpunkt Null als eine negative Verzögerung definiert werden,

(r) die Bestimmung der dem Korrelationspeak am Bezugszeitpunkt Null nacheilenden Signale erfolgt, wobei

• im Falle der Sendung nur eines Präambelsymbols am Anfang jedes Timeslots alle nach dem Bezugszeitpunkt Null liegenden Korrelationspeaks, oder

• im Falle der Sendung zweier Präambelsymbole am Anfang jedes Timeslots alle nach dem Bezugszeitpunkt Null liegenden Korrelationspeaks, ausgenommen die vorauseilenden Signale des zweiten Präambelsymbols,

als nacheilende Signale und ihr Abstand zum Bezugszeitpunkt Null als eine positive Verzögerung definiert werden,

(s) die Einhaltung der Bedingung, daß die Summe der Absolutbeträge der solcher Art ausgewählten Korrelationspeaks der voreilenden und nacheilenden Signale gleich oder kleiner als eins ist, geprüft wird, und bei Überschreitung dieses Werte eine Korrektur erfolgt, indem

• in einer ersten Variante die Korrelationspeaks mit den größten Absolutbeträgen solange berücksichtigt werden, wie die Einhaltung der genannten Bedingung dies zuläßt und die weiteren ausgewählten Korrelationspeaks weiterhin nicht mehr berücksichtigt werden, oder

• in einer zweiten Variante ein Kürzungsfaktor so bestimmt wird, daß bei proportionaler Kürzung aller ausgewählten Korrelationspeaks ihre Summe die genannte Bedingung erfüllt,

wobei eine der Varianten als Default einzustellen ist und eine Umschaltung wahlweise automatisch oder über Network Management Funktion durchgeführt wird und in Abhängigkeit von den Auswirkungen auf die Fehlerrate erfolgt,

(t) aus den gespeicherten I- und Q-Korrelationswerten der ausgewählten und zu berücksichtigenden Korrelationspeaks die komplexwertigen Equalizerkoeffizienten berechnet werden, deren Real- und Imaginärteile jeweils die Koeffizienten für den Equalizer (154) im I-Zweig und einen entsprechenden Equalizer im Q-Zweig darstellen, und eingeschlossen in diesen Verfahrensschritt eine Korrektur zur Berücksichtigung des Offsets erfolgt, welches von dem Präambelsymbol verursacht wird, welches durch den Korrelationspeak mit dem Bezugszeitpunkt Null charakterisiert wird, und im Falle der vorgenannten zweiten Variante der Korrektur der Summe der Korrelationspeaks die Real- und Imaginärteile dieser Equalizerkoeffizienten jeweils durch den Kürzungsfaktor dividiert werden,

(u) für die Durchführung der Equalization die so bestimmten Equalizerkoeffizienten, **gekennzeichnet durch** Real- und Imaginärteil und vorzeichenbehaftete Verzögerung, an besagte Equalizer übergeben werden, welche Equalizer digitale Verzögerungsleitungen für die digitalisierten 1- und Q-Signalkomponenten des Empfangssignals umfassen, in welche das adäquat zu den Verfahrensschritten in (b) und (c) aufbereitete Empfangssignal eingespeist und mit dem Samplingtakt der AID-Wandlung entsprechend (c) in den Verzögerungsleitungen verschoben wird,

(v) Besagte Equalizer jeweils für die I- und Q-Signalkomponenten unter Verwendung der Real- und Imaginärteile der Equalizerkoeffizienten

• für EqualiZerkoeffzienten mit positiver Verzögerung eine bewertete Signalrückkopplung und

• für Equalizerkoeffizienten mit negativer Verzögerung eine bewertete Signalvorwärtskopplung durchführen, indem

• das Signal an einem inneren Punkt der Verzögerungsleitung als Signal mit der Verzögerung Null definiert wird,

• die Verzögerung von Signalen, welche in der Verzögerungsleitung in Relation zur Schieberichtung vor beziehungsweise nach dem besagten Punkt mit der Verzögerung Null liegen, als negativ beziehungsweise positiv definiert wird,

und mit jedem Schiebetakt

• diejenigen Signale an Signalabgriffen der Verzögerungsleitung mit denjenigen Equalizerkoeffizienten multipliziert werden, die identische Verzögerungen aufweisen, und sofern kein Equalizerkoeffizient für diesen Wert der Verzögerung definiert ist, eine Multiplikation mit Null erfolgt,
• die Ergebnisse aller Multiplikationen addiert und
• das so erhaltene Summensignal am Punkt der Verzögerungsleitung mit der Verzögerung Null additiv in den Signalweg eingekoppelt wird.

2. Verfahren nach dem Oberbegriff des Anspruchs 1, **dadurch gekennzeichnet, daß** in der Uplinkrichtung (93) des Airinterface des besagten Kommunikationssystems

(A) in der Phase des Aufbaus einer Verbindung zwischen einer Teilnehmerstation und der Basisstation in der Teilnehmerstation eine Bestimmung der individuellen Kanalimpulsantwort, Bestimmung von Equalizerkoeffizienten und ein Preequalization erfolgen, indem

(a) die in den Verfahrensschritten entsprechend Anspruch 1 (a) bis (t) bestimmte Kanalimpulsantwort und daraus berechneten Equalizerkoeffizienten auch für das Preequalization der Aussendungen der Teilnehmerstation genutzt werden, ausgehend von der Annahme der Reziprozität des Funkkanals,
(b) für die Durchführung der Preequalization die so bestimmten Equalizerkoeffizienten, **gekennzeichnet durch** Real- und Imaginärteil und vorzeichenbehaftete Verzögerung, jeweils an den Preequalizer (159) im I-Zweig und einen entsprechenden Preequalizer im Q-Zweig übergeben werden, welche Preequalizer digitale Verzögerungsleitungen für die digitalen I- und Q-Signalkomponenten des Sendesignals umfassen, in welche das I-/Q-gesplittete und gespreizte Sendesignal eingespeist und mit dem Samplingtakt der nachfolgenden D/A-Wandlung in den Verzögerungsleitungen verschoben wird,
(c) besagte Preequalizer jeweils für die I- und Q-Signalkomponenten unter Verwendung der Real- und Imaginärteile der Equalizerkoeffizienten,

• für Equalizerkoeffizienten mit positiver Verzögerung eine bewertete Signalrückkopplung und
• für Equalizerkoeffizienten mit negativer Verzögerung eine bewertete Signalvorwärtskopplung

durchführen, indem

• das Signal an einem inneren Punkt der Verzögerungsleitungen als Signal mit der Verzögerung Null definiert wird und
• die Verzögerung von Signalen, welche in der Verzögerungsleitung in Relation zur Schieberichtung vor beziehungsweise nach dem besagten Punkt mit der Verzögerung Null liegen, als negativ beziehungsweise positiv definiert wird,

und mit jedem Schiebetakt

• diejenigen Signale an Signalabgriffen der Verzögerungsleitung mit denjenigen Equalizerkoeffizienten multipliziert werden, die identische Verzögerungen aufweisen, und sofern kein Equalizerkoeffizient für diesen Wert der Verzögerung definiert ist, eine Multiplikation mit Null erfolgt,
• die Ergebnisse aller Multiplikationen addiert und
• das so erhaltene Summensignal am Punkt der Verzögerungsleitung mit der Verzögerung Null additiv in den Signalweg eingekoppelt wird,

(B) in der Phase einer eingerichteten Verbindung zwischen einer Teilnehmerstation und der Basisstation in der Basisstation eine Bestimmung der individuellen Kanalimpulsantwort, Bestimmung von Equalizerkoeffizienten, deren Übertragung an die Teilnehmerstation und in der Teilnehmerstation unter Verwendung der von der Basisstation übertragenen Equalizerkoeffizienten ein Preequalization erfolgen, indem

(a) von der Teilnehmerstation bestimmte der ihr für die bestehende Verbindung zugewiesenen Timeslot mit der Aussendung mindestens eines oder zwei Präambelsymbole eingeleitet werden,

• welche Präambelsymbole mit einer Codesequenz gespreizt sind, die nicht mit der Codesequenz für die nachfolgende Nutzdatenübertragung identisch ist,

• welche Präambelsymbole ohne ein Preequalization in der Teilnehmerstation ausgesandt werden und

• welche Aussendung von Präambelsymbolen exclusiv ist und nicht **durch** Aussendungen anderer Teilnehmerstationen überlagert wird,

(b) von der Basisstation in den bestimmten Timeslots die Bestimmung der individuellen Kanalimpulsantwort für den Funkanal von der betreffenden Teilnehmerstation zur Basisstation und die Bestimmung der Equalizerkoeffizienten durchgeführt wird, indem die Verfahrensschritte entsprechend Anspruch 1 (b) bis (t) adäquat in der Basisstation durchgeführt werden,

(c) von der Basisstation die derart bestimmten Equalizerkoeffizienten an die betreffende Teilnehmerstation übermittelt werden und

(d) in der Teilnehmerstation die übermittelten Equalizerkoeffizienten für das Preequalization entsprechend den Verfahrensschritten in (A), (b) und (c) genutzt werden.

3. Verfahren nach Anspruch 1, **gekennzeichnet dadurch, daß** die ständige Erneuerung der Messung der Kanalimpulsantwort, Berechnung der sich daraus ergebenden Equalizerkoeffizienten und Aktualisierung der Einstellungen der Equalizer

- auch außerhalb eines Verbindungszustandes der Teilnehmerstation durch Empfang der Aussendungen der Basisstation erfolgt,
- zu Beginn jedes der Timeslots (95) des Downlink (92) durchgeführt wird und
- über die Meßergebnisse aufeinanderfolgender Timeslots eine gleitende Mittelwertbildung mit einer variierbaren Fenstergröße von 2 oder mehr als 2 Messungen erfolgt.

4. Verfahren nach Anspruch 1, **gekennzeichnet dadurch, daß** die Präambelsymbole entsprechend Verfahrensschritt (a) für alle Codekanäle

- identisch sind,
- mit der gleichen Codesequenz gespreizt und
- synchron ausgesandt werden,

und unter Nutzung dieser Bedingungen die Generierung besagter Präambelsymbole und deren Aussendung in der Basisstation in nur einer Einrichtung als Summensignal erfolgt, welches mit einem Leistungspegel über dem Leistungspegel der Nutzdatensendung im einzelnen Codekanal ausgesandt wird.

5. Verfahren nach Anspruch 1 oder 2, **dadurch gekennzeichnet, daß** vor jeder Sendung von Präambelsymbolen (122) Schutzzeiten (124, 128) eingefügt sind, die größer oder gleich der Dauer eines Präambelsymbols sind.

6. Verfahren nach Anspruch 1 oder 2, **gekennzeichnet dadurch, daß** die Verfahrensschritte zur Bestimmung der Kanalimpulsantwort umfassen, daß von einer Recheneinheit

- die Speicherung von Ausgangssignalen der AID-Wandler nur während eines Zeitfensters, umfassend die Schutzzeit zwischen den Timeslots und die Übertragungsdauer der Präambelsymbole am Beginn der Timeslots, erfolgt und
- die Korrelation der gespeicherten Signalwerte mit der Präambelsequenz erst nach Vorliegen aller Eingangssignale des besagten Empfangsfensters erfolgt.

7. Verfahren nach Anspruch 2, **gekennzeichnet dadurch, daß** die Vergabe der Berechtigung zur exclusiven Aussendung von Präambelsymbolen durch eine bestimmte Teilnehmerstation derart erfolgt, daß

- in der Basisstation ein Hyperframe gebildet wird, welcher eine Anzahl von N Frames umfaßt, wobei N gleich der Anzahl der Codekanäle ist,
- in der Basisstation ein Framezähler generiert wird, welcher modulo N oder k*N, mit ganzzahligem k größer 1, die Position jedes Frames im Hyperframe definiert,
- von der Basisstation der Stand des Framezählers in einem Broadcast Channel an die Teilnehmerstationen gesendet wird,
- ein Algorithmus vorgegeben ist, welcher der Basisstation und den Teilnehmerstationen a priori bekannt ist, und welcher in Abhängigkeit vom Wert des Framezählers festlegt, daß innerhalb des Hyperframes jeder Timeslot jedes Codekanals genau einmal die Berechtigung zur exclusiven Aussendung von Präambelsymbolen erhält und

- die Teilnehmerstation, deren ihr zur Datenübertragung zugewiesener Timeslot entsprechend besagtem Algorithmus zum berechtigten Timeslot wird, die Aussendung der Präambelsymbole vornimmt.

8. Verfahren nach Anspruch 2 und 7, **gekennzeichnet dadurch, daß** besagter Algorithmus zur Vergabe der Berechtigung zur exclusiven Aussendung von Präambelsymbolen diese Berechtigung

- nach jedem Timeslot in einem neuen Codekanal vergibt und
- im gleichen Codekanal erst nach Durchlauf über alle anderen Codekanäle erneut einem Timeslot zuweist.

9. Einrichtung zur Durchführung des Verfahrens nach Anspruch 1, **gekennzeichnet dadurch, daß** diese Equalizer mit für den I- und Q-Empfangszweig identischen Einrichtungen umfaßt, welche ihrerseits jeweils

- eine erste Reihenschaltung von digitalen Verzögerungsgliedern (174), die eine konstante Verzögerungszeit besitzen und deren Eingangssignale parallel an erste Eingänge digitaler Multiplizierer (178) angeschaltet sind,
- eine zweite Reihenschaltung von digitalen Verzögerungsgliedern (176), die eine konstante Verzögerungszeit besitzen und deren Ausgangssignale parallel an erste Eingänge digitaler Multiplizierer (180) angeschaltet sind,
- digitale Multiplizierer (178,180), deren zweite Eingänge mit einer Recheneinheit (184), über welche die Equalizerkoeffizienten (179, 181) eingegeben werden, verbunden sind, und deren Ausgänge das Multiplikationsergebnis an Eingänge eines digitalen Addierers (182) übergeben,
- einen digitalen Addierer (182), an dessen Eingängen die vorwärts- und rückgekoppelten und mit den Equalizerkoeffizienten bewerteten Signalanteile anliegen und dessen Ausgang (183) mit einem zweiten Eingang eines digitalen Addierers (175) verbunden ist, und
- einen digitalen Addierer (175), dessen erster Eingang an den Ausgang der ersten Reihenschaltung von digitalen Verzögerungsgliedern (174) angeschaltet ist, dessen zweiter Eingang mit dem Ausgang des digitalen Addierers (182) und dessen Ausgang mit dem Eingang der zweiten Reihenschaltung von digitalen Verzögerungsgliedern (176) verbunden ist,

umfassen.

10. Einrichtung zur Durchführung des Verfahrens nach Anspruch 2, **gekennzeichnet dadurch, daß** diese einen Preequalizer mit für den I- und Q-Empfangszweig identischen Einrichtungen umfaßt, welche ihrerseits jeweils mit den Einrichtungen des Equalizers nach Anspruch 9 identisch sind.

11. Einrichtung nach Anspruch 10, **dadurch gekennzeichnet, daß** diese für Equalizing und Vorentzerrung nur eine Einrichtung umfaßt, welche alternierend als Equalizer (154) und als Preequalizer (159) genutzt wird, indem zwischen den Empfangs- und Sendephasen und umgekehrt eine entsprechende Umschaltung der Eingänge und der Ausgänge dieser Einrichtung zwischen den Einfügepunkten im Empfangs- und Sendezweig durchgeführt wird, und sofern unterschiedliche Koeffizientensätze gelten, in den Umschaltphasen auch das Laden des jeweils nachfolgend zutreffenden Koeffizientensatzes erfolgt.

**Claims**

1. A method for determining the channel impulse response and the compensation of interference due to multipath propagation effects within the air interface of a radio communication system which consists of a base station (1), an air interface (3) and a plurality of subscriber terminal stations (4) wherein these terminal stations have either an subscriber interface (6) for the access to the PSTN and an Ethernet interface (8) for the internet access which may be used independent of each other and simultaneously and the communication system has either an access network to the PSTN and an access network to the internet wherein the load sharing between both access networks will be adapted according to the current traffic requirements and the transmission mode of the air interface is based upon a combined DS CDM/CDMA and TDM/TDMA technology in a TDD scheme;
said method performed by the terminal station for the downlink direction (92) of the air interface protocol to determine the individual radio channel impulse response, to calculate the coefficients for the equalization procedure and to perform the equalization comprising the steps of

(a) transmitting at minimum one or two preamble symbols (122) which are spread by a chip sequence that is not identical to the spreading sequence for the payload transmission at the beginning of each time slot (95) by the base station,

(b) receiving, demodulating and splitting into in-phase and quadrature signal components (151, 152) the transmitted signals of the base station by the terminal station,

(c) analogue-to-digital-converting the in-phase and quadrature signal components wherein the analogue-digital-conversion is performed at the chip clock rate or an over-sampling factor which is an integer multiple of the chip clock rate,

(d) storing the digitized in-phase and quadrature input signals,

(e) calculating cross correlation values of the digitized in-phase and quadrature input signals with the preamble chip sequence for all received samples of a first time frame in each one correlation device,

(f) using simultaneous cross correlation values and performing a first calculation of the complex-valued channel impulse response **characterized by** a real and an imaginary part and an initially arbitrary time reference,

(g) using the complex values of the channel impulse response and calculating absolute values,

(h) checking for a number of local maximum values to be equal to the number of transmitted preamble symbols and their temporal distance to be equal to the duration of one preamble sequence, and not accepting the results in a negative case,

(i) choosing the earliest of the local maximum values and referring its received time as the zero time reference,

(j) adding data to the sequences of the stored and digitized input signals of the in-phase and quadrature chain which are derived from ideal noiseless received samples of the preamble sequence and which are transferred one sequence length before the preamble sequence **characterized by** said correlation maximum at zero time reference comprising the steps of:

> • using the in-phase and quadrature correlation values of said correlation maximum value at zero time reference to calculate this fraction of the preamble sequence which is contained in the digitized input signals of the in-phase and quadrature chain for the duration of one sequence length before the zero time reference and
>
> • forward shifting the calculated fraction of the said maximum correlation value by the duration of one sequence length and adding it to the stored digitized input signals of the in-phase and quadrature chain.

(k) performing a second calculation of the cross correlation values of said adapted and changed input signals of the in-phase and quadrature chain with the preamble sequence,

(l) using simultaneous cross correlation values and performing a second calculation of the complex-valued channel impulse response **characterized by** a real and an imaginary part and an actual time lag to the zero time reference,

(m) using the updated complex values of the channel impulse response and calculating updated absolute values,

(n) checking for a number of local maximum values to be equal to the number of transmitted preamble symbols plus one and their temporal distance to be equal to the duration of one preamble sequence and the second local maximum value having no time lag to the zero time reference, and not accepting the results in a negative case,

(o) choosing all said absolute values except the said local maximum values and dividing them by the absolute value at zero time reference and adjusting for the time lag caused by the preamble symbol **characterized by** the local correlation maximum at zero time reference,

(p) extracting those samples from the chosen and adjusted absolute values as the relevant parameters of the channel impulse response that exceed a certain predefined amplitude threshold,

(q) determining the leading signals before the local correlation maximum at zero time reference and defining them as leading signals to the zero time reference with a negative delay by:

> • using all local correlation maxima before zero time reference in case of the transmission of only one preamble symbol at the beginning of each time slot, or
>
> • comparing a first time amplitude pattern of all local correlation maxima before zero time reference with an adequate second time amplitude pattern shifted by the duration of one preamble sequence and using all local correlation maxima of the said first time amplitude pattern with matches in the said second time amplitude pattern in case of the transmission of two preamble symbols at the beginning of each time slot,

(r) determining the lagging signals after the local correlation maximum at zero time reference and defining them as lagging signals to the zero time reference with a positive delay by:

> • using all local correlation maxima after zero time reference in case of the transmission of only one preamble symbol at the beginning of each time slot, or
>
> • using all local correlation maxima after zero time reference except those which have been identified as leading signals of the second preamble symbol in case of the transmission of two preamble symbols at the beginning of each time slot,

(s) checking the condition that the sum of the absolute values of all said leading and lagging local correlation maxima chosen is equal or less then one and in negative case performing a correction comprising the steps of

• in a first version ordering the said local correlation maxima, considering only the largest of them as long as the said condition is fulfilled and rejecting all other local correlation maxima, or
• in a second version determining a reduction factor in such a way that all local correlation maxima divided by this factor fulfil the said condition,

wherein one version is set as the default version and a switch-over is performed automatically or manually by network management function depending on the current bit error rate,

(t) using the stored in-phase and quadrature correlation values of the chosen and considered local correlation maxima and calculating the complex-valued coefficients for equalization wherein the real and imaginary parts correspond to the coefficients for the equalizer (154) of the in-phase chain and the quadrature chain, respectively, and adjusting for the time lag caused by the preamble symbol **characterized by** the local correlation maximum at zero time reference and in case of said second version for the correction of said sum of local correlation maxima dividing the real parts and imaginary parts of the coefficients for equalization by said reduction factor,

(u) delivering the calculated coefficients for the equalization with real and imaginary parts and a signed delay value to said equalizer to perform the equalization wherein the equalizer uses digital delay lines for the digitized in-phase and quadrature received signal components in which the received and pre-processed signal according to the steps (b) and (c) is fed in and shifted by the clock rate of the analogue-digital conversion according to (c),

(v) performing within said equalizers each for the in-phase and quadrature signal components by using the real and imaginary parts of the coefficients for the equalization

• for coefficients for the equalization with a positive delay value a weighted signal feedback and
• for coefficients for the equalization with a negative delay value a weighted signal feed-forward by
• defining the signal at the innermost point to have a zero delay value,
• and defining the delay values of signals which are in front of the innermost point of the delay line referred to the shift direction as negative and those which are behind the innermost point as positive,

and performing the operations by

• multiplying those signals at the taps of the delay lines by the coefficients for the equalization that have identical delay values and multiplying by zero if there is no coefficient with such a delay value available,
• adding the results of all said multiply operations and
• injecting and adding the said summed signal into the tap of the delay line with zero delay.

2. Method according to the preamble of claim 1 for the uplink direction (93) of the air interface of said communication system comprising the steps of:

(A) determining the individual channel impulse response, calculating the coefficients for the equalization and performing a pre-equalization within the subscriber terminal station during an initial establishment of the connection between the subscriber terminal station and the base station by

(a) using the derived channel impulse response according to claim 1 (a) to (t) and further using the calculated coefficients for the equalization for the pre-equalization of the transmissions of the terminal station, too, by assuming the reciprocity of the radio channel,

(u) delivering the calculated coefficients for the equalization with real and imaginary parts and a signed delay value to said pre-equalizer (159) in the in-phase chain and an adequate pre-equalizer in the quadrature chain to perform the pre-equalization wherein the pre-equalizer uses digital delay lines for the digitized in-phase and quadrature transmit signals in which the split and spread transmit signal is fed in and shifted by the clock rate of the digital-analogue-conversion,

(c) performing within said equalizers each for the in-phase and quadrature signal components by using the real and imaginary parts of the coefficients for the equalization

• for coefficients for the equalization with a positive delay value a weighted signal feedback and

• for coefficients for the equalization with a negative delay value a weighted signal feed-forward by
• defining the signal at the innermost point to have a zero delay value,
• and defining the delay values of signals which are in front of the innermost point of the delay line referred to the shift direction as negative and those which are behind the innermost point as positive,

and performing the operations by

• multiplying those signals at the taps of the delay lines by the coefficients for the equalization that have identical delay values and multiplying by zero if there is no coefficient with such a delay value,
• adding the results of all said multiply operations and
• injecting and adding the said summed signal into the tap of the delay line with zero delay.

(B) determining the individual channel impulse response, calculating the coefficients for the equalization and performing a pre-equalization within the subscriber terminal station during an permanent connection between the subscriber terminal station and the base station by

(a) transmitting at the beginning of an assigned time slot for the permanent connection at least one or two preamble symbols by the terminal station,

• wherein these preamble symbols are spread by a code sequence which is not identical to the code sequence for the subsequent payload transmission,
• wherein these preamble symbols are transmitted without pre-equalization by the terminal station and
• wherein the transmission of the preamble symbols is exclusively for the assigned terminal station and not superimposed by the transmission signals of other terminal stations,

(b) determining the individual channel impulse response for the radio channel from the concerning terminal station to the base station and calculating the coefficients for the equalization comprising the steps according to claim 1 (b) to (t) adequately within the assigned time slot by the base station,
(c) transferring the said determined coefficients for the equalization from the base station to the said assigned terminal station and
(d) using the said transferred coefficients within the said assigned terminal station for the pre-equalization according to the steps in (A), (b) and (c).

3. Method according to claim 1 to determine permanently updated measurements of the radio channel impulse response, to calculate the coefficients for the equalization procedure and to adjust the updated equalization parameters comprising the steps of

- receiving the transmissions of the base station even if there is no current connection by a certain subscriber terminal station,
- performing it at the beginning of each time-slot (95) of the downlink frame (92) and
- calculation a sliding average value of successive time-slots with an adjustable window size of 2 or more than 2 measurement cycles.

4. Method according to claim 1 **characterized by** preamble symbols according to procedure (a) which are for all code channels

- the same,
- spread by the same code sequence and
- transmitted synchronously,

and which are generated under these terms in only one device as a summed signal and transmitted with an output power higher than the output power of the payload transmissions for a single code channel.

5. Method according to claim 1 or 2 **characterized by** guard times (124, 128) before each transmission of preamble symbols (122) which are longer or at least equal to the duration of one preamble symbol.

6. Method according to claim 1 or 2 comprising the steps for determining the channel impulse response **characterized by** a computer unit for

- storing the output signals of the analogue-digital-converter only during the time window involving the guard-time between the time-slots and the duration of the preamble symbols at the beginning of each time-slot and
- calculating the cross-correlation value of the stored signal samples and the preamble sequence only after receiving all input signals within said time window.

**7.** Method according to claim 2 **characterized by** assigning the value set for an exclusive transmission of a certain subscriber terminal station by comprising the steps of

- realizing a hyper frame in the base station transmission protocol with N frames wherein N is equal to the number of different code channels,
- generating a frame counter in the base station which defines the position of each frame within the hyper frame modulo N or k*N with k being an integer larger than 1,
- transferring the current value of the frame counter form the base station to the subscriber terminal stations within a broadcast channel,
- defining an algorithm which is a priori known to the base station and the terminal stations and which states for each value of the frame counter the value set for an exclusive transmission of preamble symbols once within the hyper frame for each time slot and each code channel and
- transmitting of the preamble symbols by that terminal station having the value set according to said algorithm for the assigned time slot.

**8.** Method according to claim 2 and 7 **characterized by** said algorithm for assigning the value set for the exclusive transmission of preamble symbols comprising the steps of

- assigning a new code channel after each time slot and
- assigning a new time slot within the same code channel only after having assigned all other code channels.

**9.** Device implementing the method of claim 1 **characterized by** identical equalizer devices in the in-phase and quadrature chain respectively and consisting of

- a first serial connection of digital delay lines (174) with constant delay values and whose input signals are connected to first inputs of digital multipliers (178),
- a second serial of digital delay lines (176) with constant delay values and whose output signals are connected in parallel to first inputs of digital multipliers (180),
- digital multipliers (178, 180) whose second inputs are connected to a computing device (184) that inputs the coefficients for the equalization (179, 181), and whose outputs deliver the result of the multiplication to the inputs of a digital adder (182),
- a digital adder (182) whose input signals are the feedback and feed-forward signals weighted by the coefficients for the equalization and whose output (183) is connected to a second input of a digital adder (175), and
- a digital adder (175) whose first input is connected to the output of said first serial connection of digital delay lines (174) and whose second input is connected to the output of the digital adder (182) and whose output is connected to the input of said second serial connection of digital delay lines (176).

**10.** Device implementing the method of claim 2 **characterized by** identical pre-equalizer devices in the in-phase and quadrature chain respectively and which are each identical to the equalizer devices according to claim 9.

**11.** Device according to claim 10 **characterized by** only one common device for equalization and pre-equalization which can be used alternating as an equalizer (154) and a pre-equalizer (159) wherein the input and output ports of this device are switched over at the insertion points in the receive and transmit chain between the transmit and the receive cycle and vice versa, and an updated set of coefficients is activated during the switch-over cycle if a different set is available.

**Revendications**

**1.** Procédé de définition de réponse d'impulsion de canal et de compensation de perturbations par diffusion à trajets multiples dans une interface air d'un système de communication sans fil, lequel système de communication englobe une station de base (1), une interface air (3) et une multitude de stations participantes (4) et dont les stations participantes (4) disposent aussi bien d'une interface participante (6) pour l'accès au RTPC (réseau téléphonique public avec commutation) et d'une interface Ethernet (8) pour l'accès à Internet, qui sont utilisables indépendamment l'une de l'autre et aussi simultanément, et lequel système de communication englobe aussi bien un réseau d'accès au RTPC qu'un réseau d'accès à Internet, la répartition de capacité entre les deux réseaux d'accès étant adaptée en fonction de la charge et la transmission dans l'interface air ayant lieu grâce à un système différentiel SD MRC/AMDC (multiplexage par répartition du code/accès multiple par différence de code) et à un système MRT/AMRT (multiplexage par répartition dans le temps/accès multiple à répartition dans le temps) intégré et DT (duplexage temporel) intégré, **caractérisé en ce que**, dans le sens de liaison descendante (92) de l'interface air dudit système de communication, il y a dans la station participante une définition de la réponse d'impulsion de canal individuelle du canal radio, une définition des coefficients d'égalisation et une égalisation, du fait que

(a) chaque intervalle de temps (95) est initié par la station de base lors de l'envoi d'au moins un ou deux symboles de préambule (122), lesquels symboles de préambule sont étalés avec une séquence de code qui n'est pas identique à la séquence de code pour la transmission consécutive de données utiles,

(b) dans la station participante, les envois de la station de base sont reçus, démodulés et fractionnés en composants de signaux I et Q (151, 152),

(c) les composants de signaux I et Q subissent une conversion A/N et cette conversion A/N a lieu à une vitesse d'échantillonnage au moins égale au timing de puce ou avec un sur-échantillonnage avec un multiple en nombre entier du timing de puce,

(d) les signaux d'entrée numérisés 1 et Q sont sauvegardés,

(e) les signaux d'entrée numérisés 1 et Q sont mis en corrélation chacun dans un corrélateur lors d'un premier passage pour tous les moments de réception avec la séquence de préambule,

(f) à partir des valeurs de corrélation respectivement simultanées des deux corrélateurs, il y a un premier calcul des valeurs complexes de la réponse d'impulsion de canal qui sont **caractérisées par** une partie réelle et imaginaire et leur situation temporelle à un moment de référence d'abord arbitraire,

(g) on calcule des valeurs absolues à partir des valeurs complexes de la réponse d'impulsion de canal,

(h) on vérifie s'il existe un nombre égal au nombre de symboles de préambule envoyés de valeurs maximales dont les écarts temporels correspondent respectivement à la durée d'une séquence de préambule et, dans le cas contraire, la mesure est rejetée,

(i) la première dans le temps de ces valeurs maximales est sélectionnée et son moment de réception est établi comme moment de référence zéro,

(j) dans les suites de signaux d'entrée numérisés sauvegardés des branches I et Q, il est inséré des données correspondant à la réception virtuelle d'une séquence de préambule qui a été transmise par un canal optimal non perturbé et qui a été transmise une longueur de séquence plus tôt que la séquence de préambule qui est représentée par la crête de corrélation précitée au moment zéro du fait que

• il est recalculé à partir des valeurs de corrélation I et Q de la crête de corrélation précitée au moment zéro dans quelles proportions la réception **caractérisée par** cette crête de corrélation d'une séquence de préambule dans l'intervalle d'une longueur de séquence avant le moment zéro est contenue dans les signaux d'entrée numérisés respectivement dans les branches I et Q avant le moment zéro dans les signaux d'entrée et

• les composantes ainsi calculées de la crête de corrélation précitée sont en plus insérés, avancés dans le temps à raison de la durée d'une longueur de séquence, dans les signaux d'entrée numérisés sauvegardés des branches I et Q,

(k) les suites, complétées comme indiqué précédemment, de signaux d'entrée numérisés des branches 1 et Q sont mises en corrélation lors d'un premier passage par toutes les valeurs modifiées avec la séquence de préambule,

(l) à partir des valeurs respectivement simultanées des deux corrélations, il y a un deuxième calcul des valeurs complexes de la réponse de canal d'impulsion qui sont **caractérisées par** une partie réelle et imaginaire et leur situation temporelle au moment de référence zéro précité,

(m) à partir des valeurs complexes de la réponse d'impulsion de canal corrigée de cette façon, les montants absolus sont à nouveau calculés,

(n) il est vérifié s'il existe un nombre qui est égal à la somme du nombre de symboles de préambule envoyés et à un symbole de préambule virtuel de valeurs maximales dont les écarts temporels correspondent respectivement à la durée d'une séquence de préambule et pour la deuxième valeur duquel la situation temporelle coïncide avec le point de référence zéro et, dans le cas contraire, la mesure est rejetée,

(o) toutes les valeurs absolues précitées, excepté les valeurs maximales déterminées comme indiqué précédemment, sont sélectionnées et normalisées au montant absolu au moment zéro et il y a, comprise dans cette étape opératoire, une correction pour tenir compte du décalage provoqué par le symbole de préambule qui est **caractérisé par** la crête de corrélation avec le moment de référence zéro,

(p) à partir des montants absolus ainsi sélectionnés et corrigés comme paramètres à prendre en compte de la réponse d'impulsion de canal, on sélectionne tous ceux qui excèdent un seuil pouvant être établi préalablement,

(q) la définition des signaux déphasés en avant de la crête de corrélation au moment de référence zéro est réalisée, sachant que

• dans le cas de l'envoi d'un seul symbole de préambule au début de chaque intervalle de temps, toutes les crêtes de corrélation se situant avant le moment de référence zéro ou,

• dans le cas de l'envoi de deux symboles de préambule au début de chaque intervalle de temps, un premier échantillon temps/niveau de la crête de corrélation se situant avant le moment de référence zéro est comparé à un deuxième échantillon temps/niveau qui est déphasé à raison de la durée d'une séquence de préambule et toutes les crêtes de corrélation du premier échantillon temps/niveau qui ont des correspondances dans le deuxième échantillon temps/niveau sont définies comme signaux déphasés en avant et leur écart par rapport au moment de référence zéro est défini comme retard négatif,

(r) il y a une définition des signaux déphasés en arrière par rapport à la crête de corrélation au moment de référence zéro, sachant que

• dans le cas de l'envoi d'un seul symbole de préambule au début de chaque intervalle de temps, toutes les crêtes de corrélation se situant après le moment de référence zéro ou,

• dans le cas de l'envoi de deux symboles de préambule au début de chaque intervalle de temps, toutes les crêtes de corrélation se situant après le moment de référence zéro, excepté les signaux déphasés en avant du deuxième symbole de préambule,

sont définies comme signaux déphasés en arrière et leur écart par rapport au moment de référence zéro est défini comme retard positif,

(s) le respect de la condition que la somme des montants absolus des crêtes de corrélation ainsi sélectionnées des signaux déphasés en avant et déphasés en arrière soit inférieure ou égale à un est vérifié et, en cas de dépassement de ces valeurs, il y a une correction, par laquelle

• dans une première variante, les crêtes de corrélation ayant les montants relatifs maximaux sont pris en compte tant que le respect de la condition indiquée le permet et les autres crêtes de corrélation sélectionnées ne sont dorénavant plus prises en compte ou

• dans une deuxième variante, il est défini un facteur de raccourcissement tel qu'en cas de raccourcissement proportionnel de toutes les crêtes de corrélation sélectionnées, leur somme remplisse la condition indiquée, sachant qu'une des variantes doit être définie comme défaut et qu'une commutation est effectuée au choix automatiquement ou par réseau et est faite en fonction des effets sur le taux d'erreur,

(t) à partir des valeurs de corrélation I et Q des crêtes de corrélation sélectionnées à prendre en compte, on calcule les coefficients d'égalisation à valeurs complexes dont les parties réelles et imaginaires constituent respectivement les coefficients pour l'égalisateur (154) dans la branche I et un égalisateur correspondant dans la branche Q et il y a, comprise dans cette étape opératoire, une correction pour tenir compte du décalage provoqué par le symbole de préambule qui est **caractérisé par** la crête de corrélation avec le moment de référence zéro et, dans le cas de la deuxième variante précitée de correction de la somme des crêtes de corrélation, les parties réelles et imaginaires de ces coefficients d'égalisation sont respectivement divisées par le facteur de raccourcissement,

(u) pour la réalisation de l'égalisation, les coefficients d'égalisation ainsi définis, **caractérisés par** une partie réelle et imaginaire et un retard à signe, sont transmis aux égalisateurs indiqués, lesquels égalisateurs comprennent des lignes de retard pour les composants de signaux numérisés I et Q du signal de réception dans lesquelles le signal de réception élaboré de manière appropriée pour les étapes opératoires en (b) et (c) est rentré et décalé avec le timing d'échantillonnage de la conversion A/N conformémentt (c) dans les lignes de retard,

(v) lesdits égalisateurs effectuent respectivement pour les composants de signaux I et Q, en employant les parties réelles et imaginaires des coefficients utilisateurs,

• pour les coefficients d'égalisation à retard positif, un rétro-couplage évalué de signal et

• pour les coefficients d'égalisation à retard négatif, un couplage en avant évalué de signal, du fait que

• le signal à un point interne de la ligne de retard est défini comme signal à retard zéro,
• le retard de signaux qui sont en relation dans la ligne de retard avec le sens de décalage avant ou après ledit point à retard zéro est défini comme négatif ou positif,

et qu'avec chaque timing de décalage

• les signaux sur des détecteurs de signaux de la ligne de retard sont multipliés aux coefficients d'égalisation présentant des retards identiques et, dans la mesure où aucun coefficient d'égalisation n'est défini pour cette valeur de retard, il y a une multiplication par zéro,
• les résultats de toutes les multiplications sont additionnés et
• le signal de somme ainsi obtenu est intégré en ajout dans le trajet de signal au point de la ligne de retard à retard zéro

2.  Procédé selon le préambule de la revendication 1, **caractérisé en ce que**, dans le sens de liaison montante (93) de l'interface air dudit système de communication,

(A) Dans la phase d'établissement d'une connexion entre une station participante et la station de base, il y a dans la station participante une définition de la réponse d'impulsion de canal individuelle, une définition des coefficients d'égalisation et une pré-égalisation, du fait que

(a) la réponse d'impulsion de canal définie dans les étapes opératoires correspondant à la revendication 1 (a) à (t) et les coefficients d'égalisation calculés à partir de là sont utilisés aussi pour la pré-égalisation des envois de la station participante en partant de l'acceptation de la réciprocité du canal radio,
(b) pour la réalisation de la pré-égalisation, les coefficients d'égalisation ainsi définis, **caractérisés par** la partie réelle et imaginaire et un retard à signe, sont transmis respectivement au pré-égalisateur (159) dans la branche en 1 et dans un pré-égalisateur équivalent dans la branche en Q, lesquels pré-égalisateurs comprennent des lignes de retard pour les composants de signaux numériques 1 et Q du signal d'envoi dans lesquels le signal d'envoi fractionné en I/Q et le signal d'envoi étalé est rentré et décalé avec le timing d'échantillonnage de la conversion N/A consécutive dans la ligne de retard,
(c) lesdits égalisateurs effectuent respectivement pour les composants de signaux I et Q, en employant les parties réelles et imaginaires des coefficients d'égalisation,

• pour les coefficients d'égalisation à retard positif, un rétro-couplage évalué de signal et
• pour les coefficients d'égalisation à retard négatif, un couplage en avant évalué de signal, du fait que
• le signal à un point interne des lignes de retard est défini comme signal à retard zéro,
• le retard de signaux qui sont en relation dans la ligne de retard avec le sens de décalage avant ou après ledit point à retard zéro est défini comme négatif ou positif est défini comme négatif ou positif

et qu'avec chaque timing de décalage

• les signaux sur des détecteurs de signaux de la ligne de retard sont multipliés aux coefficients d'égalisation présentant des retards identiques et, dans la mesure où aucun coefficient d'égalisation n'est défini pour cette valeur de retard, il y a une multiplication par zéro,
• les résultats de toutes les multiplications sont additionnés et
• le signal de somme ainsi obtenu est intégré en ajout dans le trajet de signal au point de la ligne de retard à retard zéro.

(B) dans la phase d'une connexion établie entre une station participante et la station de base, il y a dans la station de base une définition de la réponse d'impulsion de canal individuelle, une définition des coefficients d'égalisation, de leur transmission à la station participante et qu'il y a dans la station participante une pré-égalisation en utilisant les coefficients d'égalisation transmis par la station de base, du fait que

(a) l'intervalle de temps défini par la station participante et attribué pour la connexion existante est initié à l'envoi d'au moins un ou deux symboles de préambule,

• lesquels symboles de préambule sont étalés avec une séquence de code qui n'est pas identique à la séquence de code pour la transmission consécutive de données utiles,
• lesquels symboles de préambule sont envoyéés sans pré-égalisation dans la station participante et

• lequel envoi de symboles de préambule est exclusif et il ne s'y superpose pas d'envois d'autres stations participantes,

(b) il est réalisé par la station de base, dans les intervalles de temps définis, une définition de la réponse d'impulsion de canal individuelle pour le canal radio de la station participante concernée à la station de base et une définition des coefficients d'égalisation du fait que les étapes opératoires correspondant à la revendication 1 (b) à (t) sont réalisées de manière adéquate dans la station de base,

(c) les coefficients d'égalisation ainsi définis sont transmis par la station de base à la station participante concernée et

(d) dans la station participante, les coefficients d'égalisation transmis sont employés pour la pré-égalisation conformément aux étapes opératoires de (A), (b) et (c).

3. Procédé selon la revendication 1, **caractérisé en ce que** le renouvellement constant de la mesure de la réponse d'impulsion de canal, le calcul des coefficients d'égalisation en résultant et l'actualisation des réglages des égalisateurs

- ont lieu également en dehors d'un état de connexion de la station participante par réception des envois de la station de base,
- au début de chacun des intervalles de temps (95), la liaison descendante (92) est réalisée et
- à l'aide des résultats de mesure d'intervalles de temps successifs, un calcul glissant de valeur moyenne est réalisé avec une taille de fenêtre variable de 2 ou plus de 2 mesures.

4. Procédé selon la revendication 1, **caractérisé en ce que** les symboles de préambule suivant l'étape opératoire (a) pour tous les canaux de code

- sont identiques,
- sont étalés avec la même séquence de code et
- sont envoyés de manière synchrone

et, qu'en utilisant ces conditions, la génération desdits symboles de préambule et de leur a lieu dans la station de base dans un seul dispositif sous forme de signal de somme qui est envoyé avec un niveau de puissance supérieur au niveau de puissance de l'envoi de données utiles dans le canal de code distinct.

5. Procédé selon la revendication 1 ou 2, **caractérisé en ce qu'**avant chaque envoi de symboles de préambule (122), sont insérés des temps de protection (124, 128) qui sont supérieurs ou égaux à la durée d'un symbole de préambule.

6. Procédé selon la revendication 1 ou 2, **caractérisé en ce que** les étapes opératoires pour la définition de la réponse d'impulsion de canal supposent qu'il soit effectué par une unité de calcul

- une sauvegarde de signaux de sortie des convertisseurs A/N seulement pendant une fenêtre temporelle englobant le temps de protection entre les intervalles de temps et la durée de transmission des symboles de préambule au début de l'intervalle de temps et
- la mise en corrélation des valeurs de signaux sauvegardées avec la séquence de préambule ait lieu seulement une fois que tous les signaux d'entrée de ladite fenêtre de réception sont présents.

7. Procédé selon la revendication 2, **caractérisé en ce que** l'accord d'autorisation d'envoi exclusif de symboles de préambule est donné par une certaine station participante de manière à ce que

- il soit constitué dans la station de base une hyper-trame comprenant un nombre de N trames, N étant égal au nombre de canaux de code,
- il soit généré dans la station de base un compteur de trame qui définit, modulo N ou k*N, sachant que k est un chiffre entier supérieur à 1, la position de chaque trame dans l'hyper-trame,
- la station de base envoie l'état du compteur de trame dans un canal de diffusion aux stations participantes,
- il soit prescrit un algorithme qui est a priori connu de la station de base et des stations participantes et qui, en fonction de la valeur du compteur de trame, établit qu'à l'intérieur de l'hyper-trame, chaque intervalle de temps de chaque canal de code reçoit précisément une fois l'autorisation d'envoi exclusif de symboles de préambule et
- la station participante dont l'intervalle de temps qui lui est attribué pour la transmission de données suivant ledit algorithme devient l'intervalle de temps autorisé procède à l'envoi des symboles de préambule.

**8.** Procédé selon les revendications 2 et 7, **caractérisé en ce que** ledit algorithme permettant d'accorder l'autorisation d'envoi exclusif de symboles de préambule

- accorde cette autorisation après chaque intervalle de temps dans un nouveau canal de code et
- assigne à nouveau un intervalle de temps dans le même canal de code seulement après passage par tous les autres canaux de code.

**9.** Dispositif de réalisation du procédé selon la revendication 1, **caractérisé en ce que** celui-ci comprend des égalisateurs avec des dispositifs identiques pour la branche de réception I et Q, qui comportent de leur côté

- un premier circuit en série d'éléments numériques de retard (174) qui présentent un temps de retard constant et dont les signaux d'entrée sont sélectionnés parallèlement à de premières entrées de multiplicateurs numériques (178),
- un deuxième circuit en série d'éléments numériques de retard (176) qui présentent un temps de retard constant et dont les signaux de sortie sont sélectionnés parallèlement à de premières entrées de multiplicateurs numériques (180),
- des multiplicateurs numériques (178, 180) dont les deuxièmes entrées sont reliées à une unité de calcul (184) par laquelle les coefficients d'égalisation (179, 181) sont rentrés et dont les sorties transmettent le résultat de multiplication à des entrées d'un totalisateur numérique (182),
- un totalisateur numérique (182) aux entrées duquel les fractions de signaux couplées en avant et rétro-couplées et évaluées avec les coefficients d'égalisation sont appliquées et dont la sortie (183) est reliée à une deuxième sortie d'un totalisateur numérique (175) et
- un totalisateur numérique (175) dont la première entrée est branchée à la sortie du premier circuit en série d'éléments numériques de retard (174) et dont la deuxième entrée est reliée à la sortie du totalisateur numérique (182) et dont la sortie est reliée à l'entrée du deuxième circuit en série d'éléments numériques de retard (176).

**10.** Dispositif de réalisation du procédé selon la revendication 2, **caractérisé en ce que** celui-ci comprend un pré-égalisateur comportant des dispositifs identiques pour la branche de réception I et Q, qui sont de leur côté respectivement identiques aux dispositifs de l'égalisateur selon la revendication 9.

**11.** Dispositif selon la revendication 10, **caractérisé en ce que** celui-ci ne comporte pour l'égalisation et la pré-harmonisation qu'un dispositif qui est utilisé alternativement comme égalisateur (154) et comme pré-égalisateur (159) du fait qu'il est réalisé entre les phases d'envoi et de réception et inversement une commutation correspondante des entrées et des sorties de ce dispositif entre les points d'insertion dans la branche de réception et d'envoi et, dans la mesure où des taux de coefficients différents s'appliquent, il y a également dans les phases de commutation un chargement du taux de coefficient respectivement applicable consécutivement.

Figur 1

Figur 2

Figur 3

Figur 4

Figur 5

Figur 7

Figur 6

Figur 8

Figur 9

Figur 10

Figur 11

Figur 12

Figur 13

Figur 14

Figur 15a

Figur 15b

**IN DER BESCHREIBUNG AUFGEFÜHRTE DOKUMENTE**

**In der Beschreibung aufgeführte Patentdokumente**

- DE 4240249
- WO 9955030 A
- US 5910946 A
- GB 2321158 A
- JP 10224853 B
- WO 9962268 A
- WO 9961984 A
- EP 0927482 A

- WO 9901969 A
- AU 8181498
- US 5905719 A
- WO 9812833 A
- GB 2313981 A
- WO 0002328 A
- US 5809086 A
- US 5377226 A

**In der Beschreibung aufgeführte Nicht-Patentliteratur**

- **P.JUNG.** Analyse und Entwurf digitaler Mobilfunksysteme. *B.G.Teubner Stuttgart,* 1997

- **K.D.KAMMEYER.** Nachrichtenübertragung. *B.G.Teubner Stuttgart,* 1992